(19) Europäisches Patentamt
European Patent Office
Office européen des brevets

(11) EP 4 157 897 B1

(12) EUROPEAN PATENT SPECIFICATION

(45) Date of publication and mention of the grant of the patent:
**01.07.2026 Bulletin 2026/27**

(21) Application number: **21735483.6**

(22) Date of filing: **28.05.2021**

(51) International Patent Classification (IPC):
***C08F 210/16*** *(2006.01)* ***C08F 4/659*** *(2006.01)*

(52) Cooperative Patent Classification (CPC):
(C-Sets available)
**C08F 210/16;** C08F 4/659; C08F 4/65912;
C08F 4/65916 (Cont.)

(86) International application number:
**PCT/US2021/034747**

(87) International publication number:
**WO 2021/243145 (02.12.2021 Gazette 2021/48)**

(54) **CHEMICALLY CONVERTED CATALYSTS**

CHEMISCH UMGEWANDELTE KATALYSATOREN

CATALYSEURS CONVERTIS CHIMIQUEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2020 US 202063031638 P**
**22.09.2020 US 202063081533 P**
**15.02.2021 US 202163149488 P**
**01.04.2021 US 202163169565 P**

(43) Date of publication of application:
**05.04.2023 Bulletin 2023/14**

(73) Proprietor: **Dow Global Technologies LLC**
**Midland, MI 48674 (US)**

(72) Inventor: **BAILLIE, Rhett A.**
**Lake Jackson, Texas 77566 (US)**

(74) Representative: **Boult Wade Tennant LLP**
**Salisbury Square House**
**8 Salisbury Square**
**London EC4Y 8AP (GB)**

(56) References cited:
**WO-A1-2015/200742**
**CA-A1- 3 117 995**
**US-A1- 2020 131 283**
**US-B2- 6 995 219**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/38;**
**C08F 210/16, C08F 4/64193;**
C08F 210/16, C08F 210/14, C08F 2500/27, C08F 2500/05, C08F 2500/04, C08F 2500/01, C08F 2500/10;
C08F 210/16, C08F 210/14, C08F 2500/27, C08F 2500/05, C08F 2500/04, C08F 2500/10;
C08F 210/16, C08F 210/14, C08F 2500/27, C08F 2500/05, C08F 2500/10

## Description

Olefin polymerization catalysts, methods, and polyolefins made thereby.

## INTRODUCTION

Polymers may be utilized for a number of products including films and pipes, among other types of products. Bimodal polymers have become increasingly important in the polyolefin industry, with a variety of manufacturers offering products of this type. Polymers such as bimodal polymers having a broad molecular weight distribution may have improved physical and/or mechanical properties, such as stiffness, toughness, processibility, and environmental stress crack resistance (ESCR), among others.

Most poly(ethylene-*co*-1-alkene) copolymers have comonomer contents (i.e., weight fraction amounts of constituent units derived from the 1-alkene that are in the copolymer) that vary with molecular weight of the constituent macromolecules thereof. Basically, if a higher molecular weight fraction of macromolecules has lower wt% comonomer content, this is a normal comonomer distribution versus molecular weight. The normal comonomer distribution is also referred to as a normal short-chain branching distribution (normal SCBD) or normal molecular weight comonomer distribution index (normal MWCDI). If MWCDI is less than 0, there is a normal MWCDI or normal SCBD. If MWCDI = 0, there is a flat MWCDI or flat SCBD. The MWCDI value is determined from a by plotting a linear regression of the comonomer content in weight percent (wt%) on a y-axis versus Log(M) on an x-axis.

If a higher molecular weight fraction has higher wt% comonomer content, this is a reverse comonomer distribution versus molecular weight. This is also referred to as a reverse short-chain branching distribution (reverse SCBD), reverse molecular weight comonomer distribution index (reverse MWCDI), or broad-orthogonal composition distribution (BOCD). If MWCDI is greater than 0, there is a reverse comonomer distribution or reverse SCBD. Additionally, the MWCDI values quantify the magnitude comonomer distribution.

These comonomer content distributions across molecular weights are shown by plotting a linear regression of the comonomer content in weight percent (wt%) on a y-axis versus Log(M) on an x-axis. The wt% comonomer content is determined by rapid Fourier Transform-Infrared (FT-IR) spectroscopy on dissolved copolymer in a gel permeation chromatography (GPC) measurement using an infrared detector. M is the specific x-axis molecular weight point, (10 ^ [Log(M)]) of a Flory distribution of molecular weight, as measured by GPC. In such a plot, the normal comonomer distribution has a negative slope (i.e., a line fitted to data points going from lower Log(M) values to higher Log(M) values (from left to right on the x-axis) slopes downward).

US-B-6,995,219 relates to a process for the preparation of a multimodal $\alpha$-olefin polymer comprising polymerizing in a polymerization stage at least one $\alpha$-olefin in the presence of a multisite catalyst and an adjuvant so as to produce a polymer having a relatively lower molecular weight component and a relatively higher molecular weight component, said adjuvant being selected from the group consisting of phosphines, phosphites, acetylenes, dienes, thiophenes and aluminium alkyls and said adjuvant being capable of altering the ratio of the fraction of higher molecular weight component to the fraction of the lower molecular weight component by at least 10%.

US-A-2020/131283 relates to a catalyst system for use in forming a multi-block copolymer, said copolymer containing therein two or more segments or blocks differing in chemical or physical properties, a polymerization process using the same, and the resulting polymers, wherein the composition comprises the admixture or reaction product resulting from combining: (A) a first olefin polymerization procatalyst, (B) a second olefin polymerization procatalyst capable of preparing polymers differing in chemical or physical properties from the polymer prepared by procatalyst (A) under equivalent polymerization conditions, (C) an activator, and (D) a chain shuttling agent.

CA-A-3117995 relates to a catalyst system comprising, or a product of an activation reaction of, a compound of formula (1):

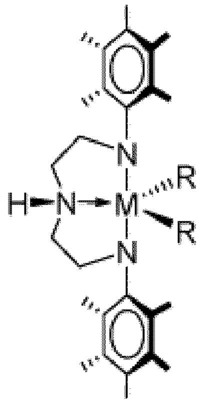

(1)

wherein M is Zr or Hf; one R independently is an unsubstituted or substituted quaternary-silahydrocarbyl group; and the other R is an unsubstituted or substituted quaternary-silahydrocarbyl group or an unsubstituted or substituted (aryl)alkyl group, an activator, and optionally a support material.

SUMMARY

Bimodal polymers generally refer to polymers produced using two or more different catalyst types or two or more different reactor environments (e.g., two or more polymerization reactors in series) such that the resultant polymers have a bimodal molecular weight distribution typically including a low molecular weight component and a high molecular weight component (having a comparatively high molecular weight and/or range of molecular weights than the low molecular weight component). However, approaches employing two or more different catalysts can lead to operability issues. For instance, operability issues can arise due to different inherent initiation and/or decay kinetics of the two or more catalysts. Additionally, approaches employing two or more reactor environments can be costly, complex, and/or have other difficulties such as those related to differences in feed rates/locations and/or to differences in reactor environments. Further, in view of the industrial importance of this field, there remains a need to provide additional synthetic methods for the preparation of single reactor catalyst capable of producing bimodal polymers in the absence of an additional catalyst.

Our technical solution to the above technical problems employs an effective amount of a modality-increasing organic compound to alter the molecular structure of a unimodal ligand-metal precatalyst into a bimodal ligand-metal catalyst. The bimodal ligand-metal catalyst and/or a catalyst system (e.g., a bimodal catalyst system and/or a trimodal catalyst system) including the bimodal ligand-metal catalyst can be employed in a single polymerization reactor to make multimodal polymers having desirable properties such as a desirable broad molecular weight distribution and/or a desired distribution of comonomer between a high molecular weight polyethylene component and a low molecular weight polyethylene component of a bimodal polyethylene composition. This result is not predictable.

***The present invention relates to a*** method of chemically converting a unimodal ligand-metal precatalyst into a bimodal ligand-metal catalyst, the method comprising combining in any order constituents consisting essentially of a first unimodal ligand-metal precatalyst, an effective amount of an activator, and an effective amount of a modality-increasing organic compound under conditions effective for the activator and the modality-increasing organic compound chemically converting the first unimodal ligand-metal precatalyst into a bimodal ligand-metal catalyst, thereby making the bimodal ligand-metal catalyst; wherein the modality-increasing organic compound is of formula ($A^1$) or ($B^1$): $R^5$-C≡C-$R^6$ ($A^1$) or $(R^5)_2C=C=C(R^6)_2$ ($B^1$) wherein each of $R^5$ and $R^6$ independently is H or $R^7$; and each $R^7$ independently is a ($C_1$-$C_{20}$)hydrocarbyl, -C(=O)-O-(unsubstituted $C_1$-$C_{20}$)hydrocarbyl), a ($C_1$-$C_{19}$)heterohydrocarbyl, or a tri(($C_1$-$C_{20}$)hydrocarbyl)silyl, or two $R^7$ are taken together to form a ($C_3$-$C_8$)alkylene; with the proviso that each $R^7$ lacks a carbon-carbon double bond; wherein each ($C_1$-$C_{20}$)hydrocarbyl independently is unsubstituted or substituted with from 1 to 4 substituent groups $R^S$; wherein each substituent group $R^S$ is independently selected from halogen, unsubstituted ($C_1$-$C_5$)alkyl, -C≡CH, -OH, ($C_1$-$C_5$)alkoxy, -C(=O)-(unsubstituted ($C_1$-$C_5$)alkyl), $-NH_2$, -N(H)(unsubstituted ($C_1$-$C_5$)alkyl), - N(unsubstituted ($C_1$-$C_5$)alkyl)$_2$, -COOH, -C(=O)-$NH_2$, -C(=O)-N(H)(unsubstituted ($C_1$-$C_5$)alkyl), -C(=O)-N(unsubstituted ($C_1$-$C_5$)alkyl)$_2$, -S-(unsubstituted ($C_1$-$C_5$)alkyl), $-S(=O)_2$-(unsubstituted ($C_1$-$C_5$)alkyl), $-S(=O)_2-NH_2$, $-S(=O)_2$-N(H)(unsubstituted ($C_1$-$C_5$)alkyl), $-S(=O)_2$-N(unsubstituted ($C_1$-$C_5$)alkyl)$_2$, -C(=)S-(unsubstituted ($C_1$-$C_5$)alkyl) and -COO(unsubstituted ($C_1$-$C_5$)alkyl); and wherein the first unimodal ligand-metal precatalyst is a biphenylphenoxy-type (BPP-type) ligand-metal precatalyst of formula (I):

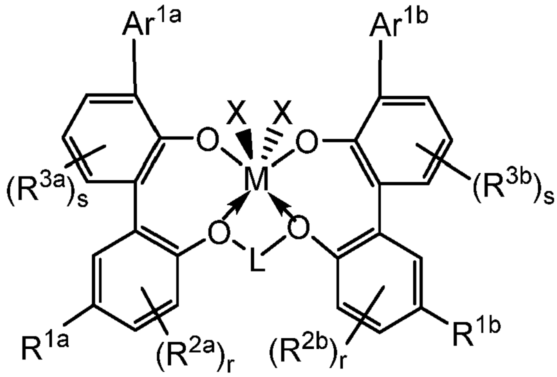

(I);

wherein L is a $CH_2CH_2$, $CH_2CH_2CH_2$, $CH_2CH_2CH_2CH_2$, $CH_2C(R^L)_2CH_2$, $CH_2CH(R^L)CH(R^L)CH_2$, $CH_2Ge(R^L)_2CH_2$, or $CH_2Si(R^L)_2CH_2$, wherein each $R^L$ independently is an unsubstituted ($C_1$-$C_{20}$)alkyl; M is Zr or Hf; each of $R^{1a}$ and $R^{1b}$ independently is F, ($C_1$-$C_{20}$)alkyl, or $Si(CH_3)_2(CH_2)_qCH_3$, wherein subscript q is an integer from 0 to 20; each subscript r independently is an integer from 0 to 3; each of $R^{2a}$ and $R^{2b}$ independently is H, F, Cl, ($C_1$-$C_5$)alkyl, or $R^{2a}$ and $R^{2b}$ may be bonded together to form a unsubstituted or substituted cycloalkyl group; each subscript s independently is an integer from 0 to 3; each of $R^{3a}$ and $R^{3b}$ independently is an unsubstituted ($C_1$-$C_{20}$)alkyl or ($C_1$-$C_{20}$)alkoxy; each $Ar^{1a}$ and $Ar^{1b}$ independently is an unsubstituted or substituted aromatic group selected from phenyl, substituted phenyl, biphenyl, substituted biphenyl, anthracene, substituted anthracene, carbazolyl, and substituted carbazolyl, wherein each substituent of the substituted aromatic group independently is alkyl; and each X independently is a monodentate group or each X is part of a multidentate (e.g., bidentate) group independently selected from a halogen atom, $((C_1\text{-}C_{20})alkyl)_{3-g}$-$(phenyl)_g$Si- wherein subscript g is 0, 1, 2, or 3; $CH_3$, a ($C_2$-$C_{20}$)alkyl-$CH_2$, a ($C_6$-$C_{12}$)aryl-(($C_0$-$C_{10}$)alkylene)-$CH_2$ (e.g., benzyl when ($C_6$-$C_{12}$)aryl is phenyl and ($C_0$-$C_{10}$)alkylene is ($C_0$)alkylene), a ($C_1$-$C_6$)alkyl-substituted ($C_6$-$C_{12}$)aryl, a ($C_1$-$C_6$)alkoxy-substituted ($C_6$-$C_{12}$)aryl, a ($C_1$-$C_6$)alkoxy-substituted benzyl, and a ($C_1$-$C_6$)alkyl-substituted benzyl; or one X is a 4-($C_1$-$C_{20}$)alkyl-substituted 1,3-butadiene molecule and each of the remaining X, if any, independently is the monodentate group X.

DETAILED DESCRIPTION

A method of chemically converting a unimodal ligand-metal precatalyst into a bimodal ligand-metal catalyst is provided, the method comprising combining in any order constituents consisting essentially of a first unimodal ligand-metal precatalyst, an effective amount of an activator, and an effective amount of a modality-increasing organic compound under conditions effective for the activator and the modality-increasing organic compound to chemically convert the first unimodal ligand-metal precatalyst into a bimodal ligand-metal catalyst, thereby making the bimodal ligand-metal catalyst; wherein the modality-increasing organic compound is of formula ($A^1$)or ($B^1$), : $R^5$-C≡C-$R^6$ ($A^1$) or $(R^5)_2C=C=C(R^6)_2$ ($B^1$) wherein each of $R^5$ and $R^6$ independently is H or $R^7$; and each $R^7$ independently is a ($C_1$-$C_{20}$)hydrocarbyl, -C(=O)-O-(unsubstituted $C_1$-$C_{20}$)hydrocarbyl), a ($C_1$-$C_{19}$)heterohydrocarbyl, or a tri(($C_1$-$C_{20}$)hydrocarbyl)silyl, or two $R^7$ are taken together to form a ($C_3$-$C_8$)alkylene; with the proviso that each $R^7$ lacks a carbon-carbon double bond; wherein each ($C_1$-$C_{20}$)hydrocarbyl independently is unsubstituted or substituted with from 1 to 4 substituent groups $R^S$; wherein each substituent group $R^S$ is independently selected from halogen (e.g., F), unsubstituted ($C_1$-$C_5$)alkyl (e.g., $CH_3$), -C≡CH, -OH, ($C_1$-$C_5$)alkoxy, - C(=O)-(unsubstituted ($C_1$-$C_5$)alkyl), -$NH_2$, -N(H)(unsubstituted ($C_1$-$C_5$)alkyl), - N(unsubstituted ($C_1$-$C_5$) alkyl)$_2$, -COOH, -C(=O)-$NH_2$, -C(=O)-N(H)(unsubstituted ($C_1$-$C_5$)alkyl), -C(=O)-N(unsubstituted ($C_1$-$C_5$)alkyl)$_2$, -S-(unsubstituted ($C_1$-$C_5$)alkyl), -S(=O)$_2$-(unsubstituted ($C_1$-$C_5$)alkyl), -S(=O)$_2$-$NH_2$, -S(=O)$_2$-N(H)(unsubstituted ($C_1$-$C_5$)alkyl), -S(=O)$_2$-N(unsubstituted ($C_1$-$C_5$)alkyl)$_2$, -C(=)S-(unsubstituted ($C_1$-$C_5$)alkyl) and -COO(unsubstituted ($C_1$-$C_5$)alkyl), and wherein the first unimodal ligand-metal precatalyst is a biphenylphenoxy-type (BPP-type) ligand-metal precatalyst of formula (I):

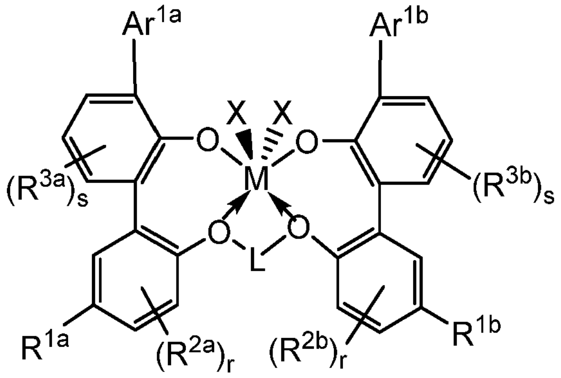

(I);

wherein L is a $CH_2CH_2$, $CH_2CH_2CH_2$, $CH_2CH_2CH_2CH_2$, $CH_2C(R^L)_2CH_2$, $CH_2CH(R^L)CH(R^L)CH_2$, $CH_2Ge(R^L)_2CH_2$, or $CH_2Si(R^L)_2CH_2$, wherein each $R^L$ independently is an unsubstituted $(C_1-C_{20})$alkyl; M is Zr or Hf; each of $R^{1a}$ and $R^{1b}$ independently is F, $(C_1-C_{20})$alkyl, or $Si(CH_3)_2(CH_2)_qCH_3$, wherein subscript q is an integer from 0 to 20; each subscript r independently is an integer from 0 to 3; each of $R^{2a}$ and $R^{2b}$ independently is H, F, Cl, $(C_1-C_5)$alkyl, or $R^{2a}$ and $R^{2b}$ may be bonded together to form a unsubstituted or substituted cycloalkyl group; each subscript s independently is an integer from 0 to 3; each of $R^{3a}$ and $R^{3b}$ independently is an unsubstituted $(C_1-C_{20})$alkyl or $(C_1-C_{20})$alkoxy; each $Ar^{1a}$ and $Ar^{1b}$ independently is an unsubstituted or substituted aromatic group selected from phenyl, substituted phenyl, biphenyl, substituted biphenyl, anthracene, substituted anthracene, carbazolyl, and substituted carbazolyl, wherein each substituent of the substituted aromatic group independently is alkyl; and each X independently is a monodentate group or each X is part of a multidentate (e.g., bidentate) group independently selected from a halogen atom, $((C_1-C_{20})alkyl)_{3-g}-(phenyl)_gSi-$ wherein subscript g is 0, 1, 2, or 3; $CH_3$, a $(C_2-C_{20})$alkyl-$CH_2$, a $(C_6-C_{12})$aryl-$((C_0-C_{10})$alkylene)-$CH_2$ (e.g., benzyl when $(C_6-C_{12})$aryl is phenyl and $(C_0-C_{10})$alkylene is $(C_0)$alkylene), a $(C_1-C_6)$alkyl-substituted $(C_6-C_{12})$aryl, a $(C_1-C_6)$alkoxy-substituted $(C_6-C_{12})$aryl, a $(C_1-C_6)$alkoxy-substituted benzyl, and a $(C_1-C_6)$alkyl-substituted benzyl; or one X is a 4-$(C_1-C_{20})$alkyl-substituted 1,3-butadiene molecule and each of the remaining X, if any, independently is the monodentate group X.

In one or more embodiments the modality-increasing organic compound is described by any one of limitations (i) to (iii): (i) of formula $(A^1)$ or $(B^1)$ (ii) of formula $(A^1)$, or (iii) of formula $(B^1)$. Without being bound by theory it is believed and has been the result that the modality-increasing organic compound of formulas $(A^1)$ and $(B^1)$ yield the ligands R (A) and (B), respectively, which as detailed herein which have a carbon-carbon double bond as a structural feature in common therebetween. In some aspects the modality-increasing organic compound consists of carbon and hydrogen atoms. In other aspects the modality-increasing organic compound consists of carbon atoms, hydrogen atoms, and a least one atom selected from a halogen atom, O, N, and Si; alternatively the modality-increasing organic compound consists of carbon atoms, hydrogen atoms, and a least one halogen atom; alternatively the modality-increasing organic compound consists of carbon atoms, hydrogen atoms, and a least one atom selected from O, N, and Si; alternatively O and N; alternatively O and Si; alternatively N and Si; alternatively O, alternatively N; alternatively Si.

The method of aspect 1 as defined above wherein the modality-increasing organic compound is of formula $(A^1)$: $P^5$-C≡C-$R^6$ $(A^1)$ that is selected from phenylacetylene; a (substituted-phenyl)acetylene; diphenylacetylene; a substituted diphenylacetylene; a cycloalkylacetylene; an acetylene of formula $HC{\equiv}CSi(phenyl)_h((C_1-C_{20})alkyl)_{3-h}$, wherein subscript h is an integer from 0 to 3; and an acetylene of formula $HC{\equiv}C-(CH_2)_mCH_3$, wherein subscript m is an integer from 1 to 15 alternatively from 1 to 10, alternatively from 2 to 15. In one or more embodiments, the modality-increasing organic compound is of formula $(A^1)$: $R^5$-C≡C-$R^6$ $(A^1)$ and the modality-increasing organic compound of formula $(A^1)$ is selected from the group consisting of any one of MIC1 to MIC14: Modality-increasing organic compound (1) ("MIC1"): phenylacetylene (i.e., $(C_6H_5)C{\equiv}CH$); Modality-increasing organic compound (2) ("MIC2"): 4-methylphenyl-acetylene (i.e., $(4-CH_3-C_6H_4)C{\equiv}CH$); Modality-increasing organic compound (3) ("MIC3"): 2,4,5-trimethylphenyl-acetylene (i.e., $(2,4,5-(CH_3)_3-C_6H_2)C{\equiv}CH$); Modality-increasing organic compound (4) ("MIC4"): 1,3,5-triethynylbenzene (i.e., 1,3,5-$tri(HC{\equiv}C)_3(C_6H_3)$; Modality-increasing organic compound (5) ("MIC5"): diphenylacetylene (i.e., $(C_6H_5)C{\equiv}C(C_6H_5)$); Modality-increasing organic compound (6) ("MIC6"): 3-fluorophenyl-acetylene (i.e., $(3-F-C_6H_4)C{\equiv}CH$); Modality-increasing organic compound (7) ("MIC7"): 4-fluorophenyl-acetylene (i.e., $(4-F-C_6H_4)C{\equiv}CH$); Modality-increasing organic compound (8) ("MIC8"): 3,4-difluorophenyl-acetylene (i.e., $(3,4-F_2-C_6H_3)C{\equiv}CH$); Modality-increasing organic compound (9) ("MIC9"): 3,5-difluorophenyl-acetylene (i.e., $(3,5-F_2-C_6H_3)C{\equiv}CH$); Modality-increasing organic compound (10) ("MIC10"): cyclohexylacetylene (i.e., $C_6H_{11}C{\equiv}CH$); Modality-increasing organic compound (11) ("MIC11"): phenyldimethylsilylacetylene (i.e., $(C_6H_5)(CH_3)_2SiC{\equiv}CH$); Modality-increasing organic compound (12) ("MIC12"): 1-pentyne (i.e., $CH_3(CH_2)_2C{\equiv}CH$); Modality-increasing organic compound (13) ("MIC13"): 1-octyne (i.e., $CH_3(CH_2)_5C{\equiv}CH$); and Modality-increasing organic compound (14) ("MIC14"): 1,7-octadiyne (i.e., $HC{\equiv}C(CH_2)_4C{\equiv}CH$).

The method as defined above wherein the modality-increasing organic compound is of formula ($B^1$) $(R^5)_2C=C=C(R^6)_2$ ($B^1$) and is selected from a cycloalkylallene; an alkylallene; a dialkylallene; a trialkylallene; a trialkylsilylallene; a vinylidenecycloalkane; and an alkyl ester of an allenecarboxylic acid. In one or more embodiments, the modality-increasing organic compound of formula ($B^1$) is selected from the group consisting of any one of MIC15 to MIC17: Modality-increasing organic compound (15) ("MIC15"): cyclohexylallene (i.e., $(C_6H_{11})C(H)=C=CH_2$); Modality-increasing organic compound (16) ("MIC16"): Ethyl 2,3-butadienoate (i.e., H2C=C=CH-C(=O)-O-$CH_2CH_3$); and Modality-increasing organic compound (17) ("MIC17"): 1,1-dimethylallene (i.e., $(CH_3)_2C=C=CH_2$).

The method as defined above wherein the modality-increasing organic compound is selected from the group consisting of: cyclohexylallene; phenylacetylene; and 3,4-difluorophenylacetylene.

The method as defined above wherein in the combining step either (i) the first unimodal ligand-metal precatalyst and bimodal ligand-metal catalyst are unsupported (i.e., free of a support material); or (ii) the first unimodal ligand-metal precatalyst is unsupported and the method further comprises, after the combining step, adding a support material to the bimodal ligand-metal catalyst so as to give a bimodal catalyst system, which comprises the support material and the bimodal ligand-metal catalyst.

The method as defined above wherein in the combining step the first unimodal ligand-metal precatalyst and the bimodal ligand-metal catalyst are independently supported on a support material such that the combining step is performed in the presence of the support material and the method makes a bimodal catalyst system comprising the support material and the bimodal ligand-metal catalyst. In one or more embodiments, wherein the first unimodal ligand-metal precatalyst is supported on a support material such that combining the constituents occurs in the presence of the support material and the method makes a bimodal catalyst system comprising the support material and the bimodal ligand-metal catalyst. In one or more embodiments, wherein the first unimodal ligand-metal precatalyst is supported on a support material such that combining the constituents occurs in the presence of the support material and the method makes a bimodal catalyst system consisting essentially of or consisting of the support material and the bimodal ligand-metal catalyst.

The method as defined above comprising combining in any order constituents consisting essentially of the modality-increasing organic compound, the activator, and a bimodal precatalyst system that consists essentially of the first unimodal ligand-metal precatalyst, a second unimodal ligand-metal precatalyst that has a ligand that is different in composition than the ligand(s) of the first unimodal ligand-metal precatalyst, and a support material; wherein the method makes a trimodal catalyst system that consists essentially of the bimodal ligand-metal catalyst, a second unimodal ligand-metal catalyst (e.g., a metallocene-type catalyst) made from the second unimodal ligand-metal precatalyst and the activator, and the support material.

The method as defined above further comprising, during or after the combining step, contacting the bimodal ligand-metal catalyst, the bimodal catalyst system, or the trimodal catalyst system with ethylene and an alpha-olefin in a polymerization reactor under steady-state polymerizing conditions so as to make a poly(ethylene-co-alpha-olefin) copolymer having a bimodal molecular weight distribution ("bimodal copolymer") or having a trimodal molecular weight distribution ("trimodal copolymer"), as determined by gel permeation chromatography (GPC). In one or more embodiments, the method as defined above further comprising, during or after the combining the constituents, contacting the at least the bimodal ligand-metal catalyst with ethylene and an alpha-olefin in a polymerization reactor under steady-state polymerizing conditions to make a poly(ethylene-co-alpha-olefin) copolymer having a multimodal molecular weight distribution, as determined by GPC.

The method as defined above wherein a comparative unimodal poly(ethylene-co-alpha-olefin) copolymer made by contacting a first unimodal ligand-metal catalyst, made from the first unimodal ligand-metal precatalyst and activator in absence of the modality-increasing organic compound, with ethylene and the alpha-olefin under the same steady-state polymerization conditions has a normal short-chain branching distribution per 1000 carbon atoms (normal SCBD/1000C) and the bimodal copolymer or trimodal copolymer has a decreased normal SCBD/1000C; wherein the comparative unimodal poly(ethylene-co-alpha-olefin) copolymer has a normal SCBD/1000C and the bimodal copolymer or trimodal copolymer has a flat SCBD/1000C; wherein the comparative unimodal poly(ethylene-*co*-alpha-olefin) copolymer has a normal SCBD/1000C and the bimodal copolymer or trimodal copolymer has a reverse SCBD/1000C; or wherein the comparative unimodal poly(ethylene-co-alpha-olefin) copolymer has a reverse SCBD/1000C and the bimodal copolymer or trimodal copolymer has an enhanced reverse SCBD/1000C. In one or more embodiments, the method of aspect 9 further comprises wherein a comparative unimodal poly(ethylene-*co*-alpha-olefin) copolymer made by contacting a first unimodal ligand-metal catalyst, made from the first unimodal ligand-metal precatalyst and activator in absence of the modality-increasing organic compound, with ethylene and the alpha-olefin under the same steady-state polymerization conditions has a normal short-chain branching distribution per 1000 carbon atoms (normal SCBD/1000C) and the multimodal copolymer has a decreased normal SCBD/1000C, a flat SCBD/1000C, a reverse SCBD/1000C, or an enhanced reverse SCBD/1000C.

The method as defined above wherein a comparative unimodal poly(ethylene-co-alpha-olefin) copolymer made by contacting a first unimodal ligand-metal catalyst, made from the first unimodal ligand-metal precatalyst and activator in

absence of the modality-increasing organic compound, with ethylene and the alpha-olefin under the same steady-state polymerization conditions has a molecular weight distribution ($M_w/M_n$) of x, wherein $M_w$ is weight-average molecular weight and $M_n$ is number-average molecular weight as measured by GPC, and the bimodal copolymer or trimodal copolymer has $M_w/M_n$ from 1.1x to 5.0x.In one or more embodiments, the comparative unimodal poly(ethylene-co-alpha-olefin) copolymer may have $M_w/M_n$ of 3.2 (x = 3.2) and the bimodal polymer or trimodal polymer made by the method may have $M_w/M_n$ of 6.7 (= 2.1x). In one or more embodiments, the method as defined above can further comprise wherein the comparative unimodal poly(ethylene-co-alpha-olefin) copolymer has a molecular weight distribution ($M_w/M_n$) of x, wherein $M_w$ is weight-average molecular weight and $M_n$ is number-average molecular weight as measured by GPC, and the multimodal copolymer has $M_w/M_n$ from 1.1x to 5.0x.

The method as defined above comprising a step of transitioning a polymerization process being run in a polymerization reactor from a process of making a unimodal poly(ethylene-*co*-alpha-olefin) copolymer to a process of making a bimodal or trimodal poly(ethylene-*co*-alpha-olefin) copolymer, the method further comprising, before the combining step, contacting a first unimodal ligand-metal catalyst, made from the first unimodal ligand-metal precatalyst and activator in absence of the modality-increasing organic compound, with ethylene and an alpha-olefin in a polymerization reactor under steady-state polymerizing conditions so as to make a poly(ethylene-*co*-alpha-olefin) copolymer having a unimodal molecular weight distribution ("unimodal copolymer"), as determined by GPC; and after the combining step contacting the bimodal ligand-metal catalyst , the bimodal catalyst system , or the trimodal catalyst system with the ethylene and alpha-olefin in the polymerization reactor under steady-state polymerizing conditions so as to make a poly(ethylene-*co*-alpha-olefin) copolymer having a bimodal or trimodal molecular weight distribution, as determined by GPC. In one or more embodiments, method as defined above further comprises transitioning a polymerization process being run in a polymerization reactor from a process of making a unimodal poly(ethylene-*co*-alpha-olefin) copolymer to a process of making a multimodal poly(ethylene-*co*-alpha-olefin) copolymer, the method further comprising, before the combining the constituents, contacting a first unimodal ligand-metal catalyst, made from the first unimodal ligand-metal precatalyst and activator in absence of the modality-increasing organic compound, with ethylene and an alpha-olefin in a polymerization reactor under steady-state polymerizing conditions so as to make a poly(ethylene-*co*-alpha-olefin) copolymer having a unimodal molecular weight distribution ("unimodal copolymer"), as determined by GPC; and after the combining step contacting at least the bimodal ligand-metal catalyst with the ethylene and alpha-olefin in the polymerization reactor under steady-state polymerizing conditions so as to make a poly(ethylene-*co*-alpha-olefin) copolymer having a multimodal molecular weight distribution, as determined by GPC. Transitioning a polymerization process being run in a polymerization reactor from a process of making a unimodal poly(ethylene-*co*-alpha-olefin) copolymer to a process of making a multimodal polymer can be desirable for various different application such as making different polymers having different properties.

The method as defined above wherein the order of the combining step comprises any one of limitations (i) to (iv): (i) combining the first unimodal ligand-metal precatalyst with the effective amount of the activator to give a first intermediate mixture that is free of the modality-increasing organic compound, and then combining the first intermediate mixture with the modality-increasing organic compound; (ii) combining the first unimodal ligand-metal precatalyst with the effective amount of the modality-increasing organic compound to give a second intermediate mixture, and then combining the second intermediate mixture with the effective amount of the activator; (iii) combining the effective amount of the activator with the effective amount of the modality-increasing organic compound to give a third intermediate mixture that is free of the first unimodal ligand-metal precatalyst, and then combining the third intermediate mixture with the first unimodal ligand-metal precatalyst; and (iv) simultaneously combining the first unimodal ligand-metal precatalyst, the effective amount of the activator, and the effective amount of the modality-increasing organic compound. In one or more embodiments, the first unimodal ligand-metal precatalyst may be free of a substituted cyclopentadienyl ligand (e.g., propylcyclopentadienyl, pentamethylcyclopentadienyl or 4,5,6,7-tetrahydroindenyl) and unsubstituted cyclopentadienyl ligand (i.e., $C_5H_5$ carbanion), i.e., the first unimodal ligand-metal precatalyst may be other than a metallocene-type precatalyst, and thus the bimodal ligand-metal catalyst made therefrom may be other than a metallocene-type catalyst. The second unimodal ligand-metal precatalyst, which has a ligand that is different in composition than the ligand(s) of the first unimodal ligand-metal precatalyst, may be a metallocene-type precatalyst.

The first unimodal ligand-metal precatalyst is a biphenylphenoxy-type (BPP-type) ligand-metal precatalyst of structural formula (I):

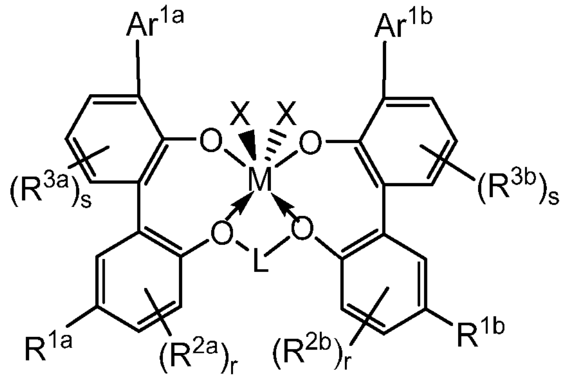

(I);

wherein L is a $CH_2CH_2$, $CH_2CH_2CH_2$, $CH_2CH_2CH_2CH_2$, $CH_2C(R^L)_2CH_2$, $CH_2CH(R^L)CH(R^L)CH_2$, $CH_2Ge(R^L)_2CH_2$, or $CH_2Si(R^L)_2CH_2$, wherein each $R^L$ independently is an unsubstituted ($C_1$-$C_{20}$)alkyl; M is Zr or Hf; each of $R^{1a}$ and $R^{1b}$ independently is F, ($C_1$-$C_{20}$)alkyl, or $Si(CH_3)_2(CH_2)qCH_3$, wherein subscript q is an integer from 0 to 20; each subscript r independently is an integer from 0 to 3; each of $R^{2a}$ and $R^{2b}$ independently is H, F, Cl, ($C_1$-$C_5$)alkyl such as $CH_3$, or $R^{2a}$ and $R^{2b}$ may be bonded together to form an unsubstituted or substituted cycloalkyl group ; each subscript s independently is an integer from 0 to 3; each of $R^{3a}$ and $R^{3b}$ independently is an unsubstituted ($C_1$-$C_{20}$)alkyl or ($C_1$-$C_{20}$)alkoxy; each $Ar^{1a}$ and $Ar^{1b}$ independently is an unsubstituted or substituted aromatic group selected from phenyl, substituted phenyl, biphenyl, substituted biphenyl, anthracene, substituted anthracene, carbazolyl, and substituted carbazolyl, wherein each substituent of the substituted aromatic group independently is alkyl; and each X independently is a monodentate group or each X is part of a multidentate (e.g., bidentate) group independently selected from a halogen atom, (($C_1$-$C_{20}$)alkyl)$_{3-g}$-(phenyl)$_g$Si- wherein subscript g is 0, 1, 2, or 3; $CH_3$, a ($C_2$-$C_{20}$)alkyl-$CH_2$, a ($C_6$-$C_{12}$)aryl-(($C_0$-$C_{10}$)alkylene)-$CH_2$ (e.g., benzyl when ($C_6$-$C_{12}$)aryl is phenyl and ($C_0$-$C_{10}$)alkylene is ($C_0$)alkylene), a ($C_1$-$C_6$)alkylsubstituted ($C_6$-$C_{12}$)aryl, a ($C_1$-$C_6$)alkoxy-substituted ($C_6$-$C_{12}$)aryl, a ($C_1$-$C_6$)alkoxy-substituted benzyl, and a ($C_1$-$C_6$)alkyl-substituted benzyl; or one X is a 4-($C_1$-$C_{20}$)alkylsubstituted 1,3-butadiene molecule and each of the remaining X, if any, independently is the monodentate group X.

In one or more embodiments the first unimodal ligand-metal precatalyst is a biphenylphenoxy-type (BPP-type) ligand-metal precatalyst of structural formula (I), above,; wherein in formula ($A^1$), ($B^1$), or ($C^1$) each of $R^5$ and $R^6$ independently is H or $R^7$; and each $R^7$ independently is a ($C_1$-$C_{20}$)hydrocarbyl, -C(=O)-O-(unsubstituted $C_1$-$C_{20}$) hydrocarbyl), a ($C_1$-$C_{19}$)heterohydrocarbyl, or a tri(($C_1$-$C_{20}$)hydrocarbyl)silyl, or two $R^7$ are taken together to form a ($C_3$-$C_8$)alkylene; with the proviso that each $R^7$ lacks a carbon-carbon double bond; wherein each ($C_1$-$C_{20}$)hydrocarbyl independently is unsubstituted or substituted with from 1 to 4 substituent groups $R^S$; wherein each substituent group $R^S$ is independently selected from halogen (e.g., F), unsubstituted ($C_1$-$C_5$)alkyl (e.g., $CH_3$), -C≡CH, -OH, ($C_1$-$C_5$)alkoxy, -C(=O)-(unsubstituted ($C_1$-$C_5$)alkyl), -$NH_2$, -N(H)(unsubstituted ($C_1$-$C_5$)alkyl), -N(unsubstituted ($C_1$-$C_5$)alkyl)$_2$, -COOH, -C(=O)-$NH_2$, -C(=O)-N(H)(unsubstituted ($C_1$-$C_5$)alkyl), -C(=O)-N(unsubstituted ($C_1$-$C_5$)alkyl)$_2$, -S-(unsubstituted ($C_1$-$C_5$) alkyl), -S(=O)$_2$-(unsubstituted ($C_1$-$C_5$)alkyl), -S(=O)$_2$-$NH_2$, -S(=O)$_2$-N(H)(unsubstituted ($C_1$-$C_5$)alkyl), -S(=O)$_2$-N(unsubstituted ($C_1$-$C_5$)alkyl)$_2$, -C(=)S-(unsubstituted ($C_1$-$C_5$)alkyl) and -COO(unsubstituted ($C_1$-$C_5$)alkyl); and wherein in formula (I): L is a $CH_2CH_2$, $CH_2CH_2CH_2$, $CH_2CH_2CH_2CH_2$, $CH_2C(R^L)_2CH_2$, $CH_2CH(R^L)CH(R^L)CH_2$, $CH_2Ge(R^L)_2CH_2$, or $CH_2Si(R^L)_2CH_2$, wherein each $R^L$ independently is an unsubstituted ($C_1$-$C_{20}$)alkyl; M is Ti, Zr, or Hf, alternatively M is Zr or Hf; each of $R^{1a}$ and $R^{1b}$ independently is a halogen atom (e.g., Cl or F, alternatively F), ($C_1$-$C_{20}$)alkyl, or $Si(CH_3)_2$ $(CH_2)_qCH_3$, wherein subscript q is an integer from 0 to 20; each subscript r independently is an integer from 0 to 3; each of $R^{2a}$ and $R^{2b}$ independently is H, F, Cl, or $R^{2b}$ independently is H, F, Cl, ($C_1$-$C_5$)alkyl, or $R^{2a}$ and $R^{2b}$ may be bonded together to form an unsubstituted or substituted cycloalkyl group, alternatively H or $CH_3$; each subscript s independently is an integer from 0 to 3; each of $R^{3a}$ and $R^{3b}$ independently is a halogen, an unsubstituted ($C_1$-$C_{20}$)alkyl, or ($C_1$-$C_{20}$)alkoxy, alternatively an unsubstituted ($C_1$-$C_{20}$)alkyl or ($C_1$-$C_{20}$)alkoxy; each $Ar^{1a}$ and $Ar^{1b}$ independently is an unsubstituted or substituted aromatic group selected from phenyl, substituted phenyl, biphenyl, substituted biphenyl, anthracene, substituted anthracene, carbazolyl, and substituted carbazolyl, wherein each substituent of the substituted aromatic group independently is alkyl; and each X independently is a monodentate group or each X is part of a multidentate (e.g., bidentate) group independently selected from a halogen atom, (($C_1$-$C_{20}$)alkyl)$_{3-g}$-(phenyl)$_g$Si- wherein subscript g is 0, 1, 2, or 3; $CH_3$, a ($C_2$-$C_{20}$)alkyl-$CH_2$, a ($C_6$-$C_{12}$)aryl-(($C_0$-$C_{10}$)alkylene)-$CH_2$ (e.g., benzyl when ($C_6$-$C_{12}$)aryl is phenyl and ($C_0$-$C_{10}$)alkylene is ($C_0$)alkylene), a ($C_1$-$C_6$)alkyl-substituted ($C_6$-$C_{12}$)aryl, a ($C_1$-$C_6$)alkoxy-substituted ($C_6$-$C_{12}$)aryl, a ($C_1$-$C_6$)alkoxy-substituted benzyl, and a ($C_1$-$C_6$)alkylsubstituted benzyl; or one X is a 4-($C_1$-$C_{20}$)alkyl-substituted 1,3-butadiene molecule and each of the remaining X, if any, independently is the monodentate group X. At least one group X functions as a leaving group during the activating step and, optionally, at least one group X functions as a leaving group during the combining step. In some embodiments at least one X does not leave but remains coordinated to M. In some

aspects at least one X is a ($C_6$-$C_{12}$)aryl-(($C_0$-$C_{10}$)alkylene)-$CH_2$ (e.g., benzyl). In some aspects each X is independently a ($C_6$-$C_{12}$)aryl-(($C_0$-$C_{10}$)alkylene)-$CH_2$, alternatively one X is a ($C_6$-$C_{12}$)aryl-(($C_0$-$C_{10}$)alkylene)-$CH_2$ (e.g., benzyl) and the other X is F, Cl, or methyl; alternatively each X is benzyl. To remove all doubt, monodentate group X does not contain a carbon-carbon double bond or a carbon-carbon triple bond, i.e., monodentate group X is not an alkenyl or alkynyl group. In some aspects each $R^7$ independently is a ($C_1$-$C_{20}$)hydrocarbyl, which independently may be unsubstituted or substituted with from 1 to 3 substituent groups selected from halogen (e.g., F) and alkyl (e.g., $CH_3$) with the proviso that each $R^7$ lacks a carbon-carbon double bond. In some embodiments L is a carbon-bridging group selected from $CH_2CH_2$, $CH_2CH_2CH_2$, $CH_2CH_2CH_2CH_2$, $CH_2C(R^L)_2CH_2$, and $CH_2CH(R^L)CH(R^L)CH_2$; alternatively $CH_2CH_2$, $CH_2CH_2CH_2$, and $CH_2CH_2CH_2CH_2$; alternatively $CH_2C(R^L)_2CH_2$ and $CH_2CH(R^L)CH(R^L)CH_2$, wherein each $R^L$ is independently as defined above. In some embodiments L is a heteroatom-containing bridging group selected from $CH_2Ge(R^L)_2CH_2$ and $CH_2Si(R^L)_2CH_2$; alternatively $CH_2Ge(R^L)_2CH_2$; alternatively $CH_2Si(R^L)_2CH_2$; wherein each $R^L$ is independently as defined above. In some embodiments L is a $R^L$-substituted bridging group selected from $CH_2C(R^L)_2CH_2$, $CH_2CH(R^L)CH(R^L)CH_2$, $CH_2Ge(R^L)_2CH_2$, and $CH_2Si(R^L)_2CH_2$; wherein each $R^L$ is independently as defined above. In some embodiments M is Zr or Hf and each of $R^{3a}$ and $R^{3b}$ independently is an unsubstituted ($C_1$-$C_{20}$)alkyl.

The first unimodal ligand-metal precatalyst of formula (I) may be any one thereof described in WO 2012/027448 A1; WO 2014/105411 A1; WO 2017/058981 A1; or WO 2018/022975 A1.

The method as defined above wherein the BPP-type ligand-metal precatalyst of structural formula (I) is any one of compounds (1) to (2):

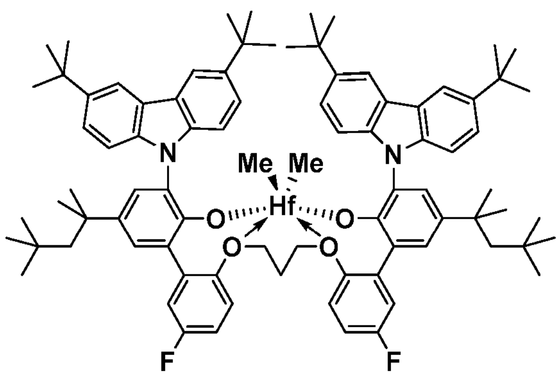

("Precatalyst 1");

and

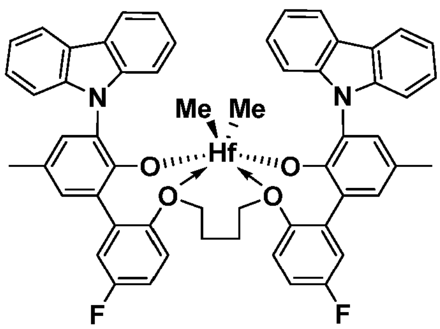

("Precatalyst 2"),

wherein each Me is methyl.

Synthesize unimodal ligand-metal precatalyst structure (1) according to the procedure of WO 2012/027448 A1. Synthesize unimodal ligand-metal precatalyst structure (2) according to the procedure of WO2018170227 A1.

The method as defined above wherein the metal of the first unimodal ligand-metal precatalyst is M, wherein the activator is an organoaluminum compound, and wherein the effective amount of the activator is an Al/M molar ratio of from 0.5 to 10,000, alternatively from 0.95 to 200, alternatively from 1.0 to 150, alternatively from 10 to 100; and/or wherein the effective amount of the modality-increasing organic compound comprises a molar ratio of modality-increasing organic compound-to-first unimodal ligand-metal precatalyst (MIOC/FUC molar ratio) of from 0.5:1.0 to 50.0:1.0, alternatively from 0.9:1.0 to 20.0:1.0, alternatively from 0.9:1.0 to 11:1.0, alternatively from 0.95:1.0 to 6:1.0.

A method of making a poly(ethylene-*co*-alpha-olefin) copolymer having a bimodal molecular weight distribution ("bimodal copolymer"), as determined by GPC, can be provided, the method consisting essentially of contacting ethylene and an alpha-olefin with the bimodal ligand-metal catalyst made by the method of any one of Aspects 1 to 16 in a

polymerization reactor under steady-state polymerizing conditions so as to make the bimodal copolymer. In one or more embodiments, the method of making the poly(ethylene-co-alpha-olefin) copolymer can comprise contacting at least one 1-alkene monomer with the bimodal ligand-metal catalyst made by the method as defined above, under slurry-phase or gas-phase polymerization conditions in a slurry-phase or gas-phase polymerization reactor, respectively, containing a moving bed of polyolefin resin, thereby making the poly(ethylene-*co*-alpha-olefin) copolymer. The moving bed may be a stirred bed or a fluidized bed. The at least one 1-alkene monomer may be ethylene or a combination of ethylene and a comonomer selected from propylene, 1-butene, 1-hexene, and 1-octene. In some embodiments the reactor is a first gas-phase polymerization reactor and is under first gas-phase polymerization conditions. Alternatively, the reactor may be a slurry-phase polymerization reactor and the polymerization conditions may be slurry-phase polymerization conditions. In some such embodiments, the method may further comprise transferring active polymer granules, made in the first gas-phase polymerization reactor under the first gas-phase polymerization conditions or made in the slurry-phase polymerization reactor under slurry-phase polymerization conditions and in either case containing (in the granules) active bimodal ligand-metal catalyst, into a (second) gas-phase polymerization reactor under (second) gas-phase polymerization conditions, which are different than the first gas-phase polymerization conditions used in the first gas-phase polymerization reactor or the slurry-phase polymerization conditions used in the slurry-phase polymerization reactor, as the case may be, thereby making a multimodal (e.g., bimodal or trimodal) polyolefin polymer (i.e., a polyolefin polymer having a multimodal (e.g., bimodal or trimodal) molecular weight distribution ($M_w/M_n$) in the (second) gas-phase polymerization reactor.

A poly(ethylene-co-alpha-olefin) copolymer made by the method as defined above can be provided, wherein the poly(ethylene-co-alpha-olefin) copolymer has a BCDI that is greater than 4, a MWCDI > 0, or both. Embodiments provide that the copolymer can have an Mn (number average molecular weight) from 10,000 to 250,000. Embodiments provide that the copolymer can have a Mw (weight average molecular weight) from 50,000 to 1,000,000. Embodiments provide that the copolymer can have a Mz (z-average molecular weight) from 500,000 to 5,000,000. Embodiments provide that the copolymer can have a Mz to Mw ratio in a range of from 2.00 to 20.00. In some embodiments, the copolymer can have a value of Mw to Mn ratio that is greater than 2.00, greater than 3.00, greater than 4.00, or greater than 5.00. Some embodiments provide that the copolymer can have an Mw to Mn ratio in a range of from 5.00 to 75.00 or from 5.00 to 50.00. Embodiments provide that the copolymer can have a Mz to Mw ratio that is less than a Mw to Mn ratio of the copolymer. Embodiments provide that the copolymer made utilizing a gas-phase polymerization reactor can have melt temperature (Tm) from 110 to 135 degrees Celsius (°C).

The copolymers can have a MWCDI such as a MWCDI-1 and/or a MWCDI-2 from 0.9 to 25.0. In some embodiments, the copolymer can have a MWCDI from a lower limit of 0.9, 1.0, 1.2, 1.5, or 1.6 to an upper limit of 25.0, 20.0, 16.0, 15.0, 14.0, 13.0, 12.0, 11.0, 10.0, 9.0, 8.0, 7.0, or 6.0. For instance, a copolymer can have MWCDI-1 from a lower limit of 0.9, 1.0, 1.2, 1.5, or 1.6 to an upper limit of 25.0, 20.0, 16.0, 15.0, 14.0, 13.0, 12.0, 11.0, 10.0, 9.0, 8.0, 7.0, or 6.0 and/or a copolymer can have MWCDI-2 from a lower limit of 0.9 1.0, 1.2, 1.5, or 1.6 to an upper limit of 25.0, 20.0, 16.0, 15.0, 14.0, 13.0, 12.0, 11.0, 10.0, 9.0, 8.0, 7.0, or 6.0.

The copolymers can have a BCDI that is greater than 4, greater than 5, or greater than 6. For instance, the copolymers can have a BCDI in a range from 4 to 500, from 4 to 450, from 4 or from 4 to 400.

A manufactured article made from the poly(ethylene-co-alpha-olefin) copolymer as defined above can be provided.

A multimodal catalyst system the bimodal ligand-metal catalyst made by the method as defined above can be provided.

**The method of chemically converting a unimodal ligand-metal precatalyst into a bimodal ligand-metal catalyst.** The method comprises combining in any order constituents consisting essentially of a first unimodal ligand-metal precatalyst, an effective amount of an activator, and an effective amount of a modality-increasing organic compound under conditions effective for the activator and the modality-increasing organic compound chemically converting the first unimodal ligand-metal precatalyst into a bimodal ligand-metal catalyst, thereby making the bimodal ligand-metal catalyst. The modality-increasing organic compound may be of formula ($A^1$) or ($B^1$). The first unimodal ligand-metal precatalyst is a biphenylphenoxy-type (BPP-type) ligand-metal precatalyst of formula (I). Metal M is Zr or Hf; alternatively M is Zr; alternatively M is Hf.

Embodiments of the method of making may comprise any one of synthetic schemes 1 to 13.

Synthesis Scheme 1: Step (a) unimodal ligand-metal precatalyst + excess activator → intermediate mixture of activated unimodal ligand-metal catalyst + leftover activator. Step (b) intermediate mixture + effective amount of modality-increasing compound → bimodal ligand-metal catalyst + the leftover activator.

Synthesis Scheme 2: Step (a) unimodal ligand-metal precatalyst + effective amount of modality-increasing compound → intermediate unimodal ligand-metal precatalyst (unreacted mixture or reaction product of unimodal ligand-metal precatalyst + modality-increasing compound). Step (b) intermediate unimodal ligand-metal precatalyst + activator (e.g., an alkylaluminoxane such as methylaluminoxane ("MAO")) → bimodal ligand-metal catalyst.

Synthesis Scheme 3: Step (a) unimodal ligand-metal precatalyst + activator (e.g., an alkylaluminoxane such as methylaluminoxane ("MAO")) → activated unimodal ligand-metal catalyst. Step (b) unimodal ligand-metal catalyst +

effective amount of modality-increasing compound → bimodal ligand-metal catalyst.

Synthesis Scheme 4: Step (a) activator (e.g., an alkylaluminoxane such as methylaluminoxane ("MAO")) + effective amount of modality-increasing compound → intermediate mixture. Step (b) Intermediate mixture + unimodal ligand-metal precatalyst → bimodal ligand-metal catalyst.

Synthesis Scheme 5: Step (a) activator → unimodal ligand-metal precatalyst ← effective amount of modality-increasing compound (simultaneous but separate additions of activator and modality-increasing compound to unimodal ligand-metal precatalyst) → bimodal ligand-metal catalyst. Step (b): none.

Synthesis Scheme 6: Step (a) unimodal ligand-metal precatalyst + support material → supported unimodal ligand-metal precatalyst. Step (b) supported unimodal ligand-metal precatalyst + an amount of activator → intermediate mixture of activated and supported unimodal ligand-metal catalyst + leftover activator disposed on (or in equilibrium with) the support material. Step (c) intermediate mixture + effective amount of modality-increasing compound → bimodal ligand-metal catalyst disposed on (or in equilibrium with) support material. In some aspects step (a) further includes an inert hydrocarbon solvent and deposition on the support material is performed by evaporating the solvent, alternatively by spray-drying. The amount of activator may be a stoichiometric amount relative to the metal M of the unimodal ligand-metal catalyst (e.g., a molar ratio of 1.0 to 1.0); alternatively a less than stoichiometric amount relative thereto (e.g., a molar ratio of from 0.1 to 0.94); alternatively an excess amount (e.g., a molar ratio from 1.1 to 10,000) relative thereto. Examples of the support material are alumina and hydrophobized fumed silica; alternatively the hydrophobized fumed silica. The hydrophobized fumed silica may be made by surface-treating an untreated, anhydrous fumed silica with an effective amount of a hydrophobing agent. The hydrophobing agent may be dimethyldichlorosilane, a polydimethylsiloxane fluid, or hexamethyldisilazane; alternatively dimethyldichlorosilane. The hydrophobized fumed silica made by surface-treating an untreated, anhydrous fumed silica with dimethyldichlorosilane may be CABOSIL TS-610, which is a fumed silica that is surface treated with dimethyldichlorosilane.

Synthesis Scheme 7: Step (a) unimodal ligand-metal precatalyst + effective amount of modality-increasing compound + support material → intermediate mixture of unimodal ligand-metal precatalyst and modality-increasing compound disposed on (or in equilibrium with) support material. Step (b) intermediate mixture + activator (e.g., an alkylaluminoxane such as methylaluminoxane ("MAO")) → bimodal ligand-metal catalyst disposed on (or in equilibrium with) support material. In some aspects step (a) further includes an inert hydrocarbon solvent and deposition on the support material is performed by evaporating the solvent, alternatively by spray-drying.

Synthesis Scheme 8: Step (a) unimodal ligand-metal precatalyst + support material + activator (e.g., an alkylaluminoxane such as methylaluminoxane ("MAO")) → activated and supported unimodal ligand-metal catalyst disposed on (or in equilibrium with) support material. Step (b) supported activated unimodal ligand-metal catalyst + effective amount of modality-increasing compound → bimodal ligand-metal catalyst disposed on (or in equilibrium with) support material. In some aspects step (a) further includes an inert hydrocarbon solvent and deposition on the support material is performed by evaporating the solvent, alternatively by spray-drying.

Synthesis Scheme 9: Step (a) activator (e.g., an alkylaluminoxane such as methylaluminoxane ("MAO")) + effective amount of modality-increasing compound → intermediate solution. Step (b) Intermediate solution + unimodal ligand-metal precatalyst + support material → bimodal ligand-metal catalyst disposed on (or in equilibrium with) support material. In some aspects step (b) further includes an inert hydrocarbon solvent and deposition on the support material is performed by evaporating the solvent, alternatively by spray-drying.

Synthesis Scheme 10: Step (a) activator → unimodal ligand-metal precatalyst + support material ← effective amount of modality-increasing compound (simultaneous but separate additions of activator and modality-increasing compound to mixture of unimodal ligand-metal precatalyst + support material) → bimodal ligand-metal catalyst disposed on (or in equilibrium with) support material. Step (b): none. In some aspects step (a) further includes an inert hydrocarbon solvent and deposition on the support material is performed by evaporating the solvent, alternatively by spray-drying.

Scheme 11: Step (a): activator (e.g., an alkylaluminoxane such as methylaluminoxane ("MAO")) + support material (e.g., hydrophobic fumed silica) + inert hydrocarbon solvent → slurry of supported activator disposed on (or in equilibrium with) support material. Step (b): spray-dry slurry of step (a) → spray-dried supported activator disposed on support material in form of a dry powder (e.g., spray-dried MAO on hydrophobic fumed silica as dry powder ("SDMAO" or "sdMAO"). Step (c): mix unimodal ligand-metal precatalyst + spray-dried supported activator of step (b) + inert hydrocarbon solvent → suspension of supported unimodal ligand-metal catalyst disposed on (or in equilibrium with) the support material. Step (d): mix suspension from step (c) with effective amount of a modality-increasing compound → suspension of a supported bimodal ligand-metal catalyst disposed on (or in equilibrium with) the support material in inert hydrocarbon solvent. Optional step (e): remove inert hydrocarbon solvent from the suspension of supported bimodal ligand-metal catalyst → supported bimodal ligand-metal catalyst disposed on support material in the form of a dry powder. Step (e) may be performed by conventional evaporating of the inert hydrocarbon solvent from the suspension from step (d) or by spray-drying the suspension from step (d).

Scheme 12: making a multimodal (bimodal) catalyst system comprising performing any one of Schemes 1-11, and when necessary (e.g., when a support material is not present), adding an amount of support material, so as to give a

bimodal catalyst system, which comprises the support material and the bimodal ligand-metal catalyst.

Scheme 13: making a multimodal (trimodal) catalyst system comprising the bimodal ligand-metal catalyst and a second unimodal ligand-metal catalyst (e.g., a metallocene-type catalyst) made from the second unimodal ligand-metal precatalyst and the activator spray-dried on a silica support: Step (a) unimodal ligand-metal precatalyst + support material + activator (e.g., an alkylaluminoxane such as methylaluminoxane ("MAO")) → activated unimodal ligand-metal catalyst disposed on (or in equilibrium with) support material. Step (b) activated unimodal ligand-metal catalyst + effective amount of modality-increasing compound → bimodal ligand-metal catalyst disposed on (or in equilibrium with) support material. Step (c) adding a second unimodal ligand-metal catalyst to the bimodal ligand-metal catalyst disposed on (or in equilibrium with) the support material to give the multimodal catalyst system. In some aspects step (a) further includes an inert hydrocarbon solvent and deposition on the support material is performed by evaporating the solvent, alternatively by spray-drying. For example, slurry support material (e.g., fumed silica) and MAO in a solvent (e.g., toluene). Then add unimodal ligand-metal precatalyst. Mix for a period of time (e.g., 1 hour). Then add modality-increasing compound. Mix for another period of time (e.g., 1 hour). Then add a second catalyst (second unimodal ligand-metal catalyst (e.g., a metallocene-type catalyst)). Spray dry resulting mixture.

The multimodal catalyst system may be made fed into the gas-phase polymerization reactor. If desired an additional quantity of the bimodal ligand-metal catalyst or an additional quantity of the second catalyst (e.g., a metallocene catalyst) may be separately fed into the reactor as a solution thereof in an inert hydrocarbon solvent, wherein it contacts the multimodal catalyst system. Such a separate catalyst solution is sometimes called a trim catalyst. Alternatively, the multimodal catalyst system may be contacted with a feed of the trim catalyst in a feed line heading into the reactor. In other embodiments the multimodal catalyst system such as a trimodal catalyst system may be made *in situ* in a gas-phase polymerization reactor by adding the bimodal ligand-metal catalyst and at least one second catalyst separately into the reactor, wherein they contact each other, thereby making the multimodal catalyst system *in situ* in the reactor.

The method of any one of the above aspects may further comprise a step of transferring polymer granules, made in the gas-phase or slurry-phase polymerization reactor and containing in the granules fully-active bimodal ligand-metal catalyst, into a (second) gas-phase polymerization reactor.

**Modality-increasing organic compound.** The modality-increasing organic compound of formula ($A^1$) is $R^5$-C≡C-$R^6$ ($A^1$). The modality-increasing organic compound of formula ($B^1$) is $(R^5)_2C=C=C(R^6)_2$ ($B^1$). The modality-increasing organic compound of formula ($A^1$) or ($B^1$) beneficially does not function as a poison to the unimodal ligand-metal catalyst or may at most function mildly as such. The compound of formula ($A^1$) is an alkyne, and that of formula ($B^1$) is an allene. The modality-increasing organic compound is free of a vinyl functional group (i.e., lacks a group of formula -C(H)=$CH_2$).In some embodiments the modality-increasing organic compound is as defined in any one of the above-described numbered aspects. In some embodiments of the modality-increasing organic compound of formula ($A^1$) or ($B^1$), the ($C_1$-$C_{20}$)hydrocarbyl is ($C_2$-$C_6$)alkyl, ($C_3$-$C_8$)cycloalkyl such as a cyclohexyl, or phenyl. In some embodiments the -C(=O)-O-(unsubstituted $C_1$-$C_{20}$)hydrocarbyl) is -C(=O)-O-(unsubstituted $C_1$-$C_5$)alkyl), alternatively -C(=O)-O-ethyl.

**Bimodal ligand-metal catalyst.** As mentioned, first unimodal ligand-metal precatalyst can be chemically converted to make the bimodal ligand-metal catalyst. Without being bound by theory it is believed that the structure of the bimodal ligand-metal catalyst is similar to the structure of the first unimodal ligand-metal precatalyst and/or a first unimodal ligand-metal catalyst (made from the first unimodal ligand-metal precatalyst), for instance, wherein one of the leaving groups X of the first unimodal ligand-metal precatalyst has been replaced by a leaving group R in the bimodal ligand-metal catalyst wherein R is defined later and is derived from the modality-increasing organic compound. Leaving group R of the bimodal ligand-metal catalyst is structurally different than the leaving group X of the first unimodal ligand-metal precatalyst. In some embodiments at least one X is (($C_1$-$C_{20}$)alkyl)$_{3-g}$-(phenyl)$_g$Si- wherein subscript g is 0, 1, 2, or 3; alternatively, wherein subscript g is 0 or 1; alternatively 0; alternatively 1. In some aspects at least one X is a ($C_6$-$C_{12}$)aryl-(($C_0$-$C_{10}$)alkylene)-$CH_2$ (e.g., benzyl). In some aspects each X is independently a ($C_6$-$C_{12}$)aryl-(($C_0$-$C_{10}$)alkylene)-$CH_2$, alternatively one X is a ($C_6$-$C_{12}$)aryl-(($C_0$-$C_{10}$)alkylene)-$CH_2$ (e.g., benzyl) and the other X is F, Cl, or methyl; alternatively each X is benzyl. In some aspects each X is benzyl, alternatively one X is a benzyl and the other X is F, Cl, or methyl. In some embodiments at least one X, alternatively each X is a ($C_1$-$C_6$)alkoxy-substituted ($C_6$-$C_{12}$)aryl or a ($C_1$-$C_6$) alkoxy-substituted benzyl. The ligand in the bimodal ligand-metal catalyst that is derived from the modality-increasing organic compound may be the group R ("ligand R"). The ligand R may be of formula (A) or (B): - C($R^5$)=C(X)$R^6$ (A) or -C$(R^5)_2$-C(X)=C$(R^6)_2$ (B); wherein each of X and $R^5$ to $R^7$ is as described herein. In some embodiments R is the ligand of formula (A) or (B), alternatively R is the ligand of formula (A), alternatively R is the ligand of formula (B).

In the ligand R of formula (A) or (B), each of $R^5$ and $R^6$ independently is H or $R^7$, and wherein each $R^7$ independently is a ($C_1$-$C_{20}$)hydrocarbyl or a ($C_1$-$C_{17}$)heterohydrocarbyl with the proviso that each $R^7$ lacks a carbon-carbon double bond. The ($C_1$-$C_{20}$)hydrocarbyl may be unsubstituted and consist of carbon atoms and hydrogen atoms or the ($C_1$-$C_{20}$)hydrocarbyl may be substituted and consist of carbon, hydrogen, and one or more halogen atoms. Each halogen atom is independently selected from F, Cl, Br, and I; alternatively from F, Cl, and Br; alternatively from F and Cl; alternatively from F; alternatively from Cl. The unsubstituted ($C_1$-$C_{20}$)hydrocarbyl may be an unsubstituted ($C_1$-$C_{20}$)alkyl, an unsubstituted ($C_3$-$C_{20}$)cycloalkyl such as a cyclohexyl group, an unsubstituted ($C_6$-$C_{12}$)aryl, an unsubstituted (($C_1$-$C_4$)

alkyl)$_{1-3}$-phenyl, or an unsubstituted ($C_6$-$C_{12}$)aryl-($C_1$-$C_6$)alkyl. The substituted ($C_1$-$C_{20}$)hydrocarbyl may be a monofluoro or difluoro derivative of the aforementioned unsubstituted ($C_1$-$C_{20}$)hydrocarbyl, such as 2-(3,4-difluorophenyl)-ethen-1-yl (of formula (A)).

Each ($C_1$-$C_{19}$)heterohydrocarbyl, of embodiments of $R^5$ to $R^7$ containing same, may be unsubstituted and consist of carbon atoms, hydrogen atoms, and at least one heteroatom selected from N and O or the ($C_1$-$C_{17}$) heterohydrocarbyl may be substituted and consist of carbon atoms, hydrogen atoms, at least one heteroatom selected from N and O, and one or more halogen atoms. The unsubstituted ($C_1$-$C_{17}$)heterohydrocarbyl may be ($C_1$-$C_{19}$)heteroalkyl, ($C_3$-$C_{19}$)heterocycloalkyl, ($C_6$-$C_{12}$)heteroaryl, (($C_1$-$C_4$)alkoxy)$_{1-3}$-phenyl, or ($C_6$-$C_{12}$)heteroaryl-($C_1$-$C_6$)alkyl. The substituted ($C_1$-$C_{17}$)heterohydrocarbyl may be a monofluoro or difluoro derivative of the aforementioned unsubstituted ($C_1$-$C_{17}$)heterohydrocarbyl, such as 2-(3,4-dimethoxyphenyl)-ethen-1-yl (of formula (A)).

The structure of ligand R is different than that of ligand X of the unimodal ligand-metal precatalyst and, for that matter, that of anion $A^-$ of a unimodal ligand-metal catalyst formed from the unimodal ligand-metal precatalyst.

**Effective amount of the modality-increasing organic compound (MIC).** A quantity of modality-increasing organic compound (MIC) sufficient to make a bimodal ligand-metal catalyst. The effective amount of MIC may be expressed in absolute terms compared to the amount of (pre)catalyst metal M or in relative terms compared to the bimodal performance or as a combination thereof.

In absolute terms in some embodiments the effective amount of the modality-increasing organic compound may be expressed as a molar ratio of moles of modality-increasing organic compound to moles of metal M ("$MIC_{mol}/M_{mol}$"), wherein M is the M of the unimodal ligand-metal precatalyst of structural formula (I), e.g., M is a Group 4 metal. In some embodiments the effective amount of the MIC is expressed as a $MIC_{mol}/M_{mol}$ of $\geq$ 0.50/1.0, alternatively $\geq$ 0.9/1.0; alternatively $\geq$ 1.0/1.0; alternatively $\geq$ 1.5/1.0; alternatively $\geq$ 1.9/1.0; alternatively $\geq$ 3/1.0; alternatively $\geq$ 5/1.0; alternatively $\geq$ 6/1.0; alternatively $\geq$ 9/1.0; alternatively $\geq$ 10.0/1.0, alternatively $\leq$ 10.0/1.0, alternatively $\leq$ 20.0/1.0, alternatively $\leq$ 30.0/1.0, alternatively $\leq$ 40.0/1.0, alternatively $\leq$ 50.0/1.0. Said another way, the immediately foregoing embodiments may be described by expressing the effective amount of the MIC as an inverse molar ratio of moles of metal M to moles of modality-increasing organic compound ("$M_{mol}/MIC_{mol}$") as follows: $\leq$ 1.0/0.5; alternatively $\leq$ 1.0/0.9; alternatively $\leq$ 1.0/1.0; alternatively $\leq$ 1.0/1.5; alternatively $\leq$ 1.0/1.9; alternatively $\leq$ 1.0/3.0; alternatively $\leq$ 1.0/5.0; alternatively $\leq$ 1.0/6.0; alternatively $\leq$ 1.0/9.0; alternatively $\leq$ 1.0/10.0, alternatively $\leq$ 1.0/20.0, alternatively $\leq$ 1.0/30.0, alternatively $\leq$ 1.0/40.0, alternatively $\leq$ 1.0/50.0, respectively. In some embodiments the $MIC_{mol}/M_{mol}$ is limited to at most 40/1; alternatively at most 30/1; alternatively at most 20/1; alternatively at most 10.0; alternatively at most 6.0; alternatively at most 5.0.

In relative terms of multimodal performance; the effective amount of the modality-increasing organic compound (MIC) may provide a bimodal ligand-metal catalyst having (i) a bimodal molecular weight distribution; (ii) an improved (e.g., reverse) comonomer distribution; or both (i) and (ii). In some embodiments the bimodal ligand-metal catalyst and the effective amount of the MIC is characterized by feature (i). In some embodiments the bimodal ligand-metal catalyst and the effective amount of the MIC is characterized by feature (ii).

In some embodiments the bimodality of the bimodal ligand-metal catalyst is characterized by GPC, Mw/Mn, or both. In some embodiments the bimodal ligand-metal catalyst is that made from any one of the unimodal ligand-metal precatalyst (1) to (2) described earlier.

Comparative or non-inventive examples either do not contain modality-increasing organic compound or contain less than the effective amount of the modality-increasing organic compound.

**Catalyst activity.** Catalyst activity of the bimodal ligand-metal catalyst is determined to be the catalyst's activity/polymerization productivity, expressed as number of grams dried polyolefin product made per gram of catalyst added to reactor-hour (gPE/gcat-hr), and all other things being equal may not be significantly less than, and in some embodiments may be more than, that of the unimodal ligand-metal precatalyst.

**Catalyst structures.** Without being bound by theory it is believed that the molecular structure of a unimodal ligand-metal catalyst (formed from the unimodal ligand-metal precatalyst of formula I) and the molecular structure of the bimodal ligand-metal catalyst may be determined by conventional analytical methods such as nuclear magnetic resonance (NMR) spectroscopy or gas chromatography/mass spectrometry (GC/MS).

**Activating step.** In some embodiments the method of making bimodal ligand-metal catalyst further comprises the activating step as a preliminary step, which may be completed before start of the combining step. The activating step comprises contacting the unimodal ligand-metal precatalyst of formula (I) with the activator under the effective activating conditions that make the unimodal ligand-metal catalyst or the bimodal ligand-metal catalyst. The activating step may be performed in the absence of the modality-increasing organic compound.

**Activator.** The activator for activating the unimodal ligand-metal precatalyst of formula (I) may be an alkylaluminoxane, an organoborane compound, an organoborate compound, or a trialkylaluminum compound. The activator may also be a combination of any two or more thereof. For example the activator may comprise an alkylaluminoxane and an organoborate compound such as a methylaluminoxane and an organoborate having CAS name Amines, bis(hydrogenated tallow alkyl)methyl, tetrakis(pentafluorophenyl)borate (Amines, bis(hydrogenated tallow alkyl)methyl, tetrakis(pentafluorophenyl)borate(1-)). The activator for activating a cyclopentadienyl-containing ligand-metal (Ti, Zr, or Hf)

complex to give the metallocene catalyst may be the trialkylaluminum compound.

**Alkylaluminoxane:** also referred to as alkylalumoxane. A product of a partial hydrolysis of a trialkylaluminum compound. Embodiments may be a ($C_1$-$C_{10}$)alkylaluminoxane, alternatively a ($C_1$-$C_6$)alkylaluminoxane, alternatively a ($C_1$-$C_4$)alkylaluminoxane, alternatively a ($C_1$-$C_3$)alkylaluminoxane, alternatively a ($C_1$-$C_2$)alkylaluminoxane, alternatively a methylaluminoxane (MAO), alternatively a modified-methylaluminoxane (MMAO). In some aspects the alkylaluminoxane is a MAO. In some embodiments the alkylaluminoxane is supported on untreated silica, such as fumed silica. The alkylaluminoxane may be obtained from a commercial supplier or prepared by any suitable method. Suitable methods for preparing alkylaluminoxanes are well-known. Examples of such preparation methods are described in U.S. Pat. Nos. 4,665,208; 4,952,540; 5,091,352; 5,206,199; 5,204,419; 4,874,734; 4,924,018; 4,908,463; 4,968,827; 5,308,815; 5,329,032; 5,248,801; 5,235,081; 5, 157, 137; 5,103,031; 5,391,793; 5,391,529; and 5,693,838; and in European publications EP-A-0 561 476; EP-B1-0 279 586; and EP-A-0 594-218; and in PCT publication WO 94/10180.

The maximum amount of alkylalumoxane may be selected to be a 5,000-fold molar excess over the precatalyst based on the molar ratio of moles of Al metal atoms in the aluminoxane to moles of metal atoms M (e.g., Ti, Zr, or Hf) in the precatalyst. The minimum amount of activator-to-precatalyst may be a 1:1 molar ratio (Al/M). The maximum may be a molar ratio of Al/M of 150, alternatively 124.

**The organoborane compound.** A tri(fluoro-functional organo)borane compound ((fluoro-organo)$_3$B) such as tris(pentafluorophenyl)borane ($(C_6F_5)_3B$), tris[3,5-bis(trifluoromethyl)phenyl]borane ($(3,5\text{-}(CF_3)_2\text{-}C_6H_3)_3B$), or a mixture of any two or more thereof.

**The organoborate compound.** A tetra(fluoro-functional organo)borate compound((fluoro-organo)$_4$B) such as N,N-dimethylanilinium tetrakis(pentafluorophenyl)borate, triphenylcarbenium tetrakis(pentafluorophenyl)borate, N,N-dimethylanilinium tetrakis[3,5-bis(trifluoromethyl)phenyl]borate, or triphenylcarbenium tetrakis[3,5-bis(trifluoromethyl) phenyl]borate, or a mixture of any two or more thereof. The organoborate compound may be a methyldi(($C_{14}$-$C_{18}$) alkyl)ammonium salt of tetrakis(pentafluorophenyl)borate, which may be obtained from Boulder Scientific or prepared by reaction of a long chain trialkylamine (Armeen™ M2HT, available from Akzo-Nobel, Inc.) with HCl and $Li[B(C_6F_5)_4]$. Such a preparation is disclosed in US 5,919,983, Ex. 2. The organoborate compound may be used herein without (further) purification. Also, Amines, bis(hydrogenated tallow alkyl)methyl, tetrakis(pentafluorophenyl)borate.

Trialkylaluminum compounds may be utilized as activators for precatalyst (metallocene precatalyst) or as scavengers to remove residual water from polymerization reactor prior to start-up thereof. Examples of suitable alkylaluminum compounds are trimethylaluminum, triethylaluminum, triisobutylaluminum, tri-n-hexylaluminum, and tri-n-octylaluminum.

The activator, also known as a cocatalyst, may affect the molecular weight, degree of branching, comonomer content, or other properties of the polyolefin polymer. The activator may enable coordination polymerization or cationic polymerization.

Without being bound by theory it is believed that the choice of activator used to activate the unimodal ligand-metal precatalyst does not influence the structure of the bimodal ligand-metal catalyst made from the unimodal ligand-metal precatalyst. That is, the structures of the bimodal ligand-metal catalyst made using different activators are expected to be identical.

**Effective conditions.** The reactions described herein (e.g., the combining step, the activating step, the polymerization) independently are conducted under circumstances that allow the reaction to proceed. Examples of effective conditions are reaction temperature, type of atmosphere (e.g., inert atmosphere), purity of reactants, stoichiometry of reactants, agitation/mixing of reactants, and reaction time period. Conditions effective for activating and polymerizing steps may be those described in the art and well-known to the ordinary skilled person. For example, activating effective conditions may comprise techniques for manipulating catalysts such as in-line mixers, catalyst preparation reactors, and polymerization reactors. The activation temperature may be from 20° to 800° C, alternatively from 300° to 650° C. The activation time may be from 10 seconds to 2 hours. Examples of gas-phase polymerizing conditions are described later herein. Effective conditions for the combining step used to make the bimodal ligand-metal catalyst may comprise a reaction temperature from -50° to 80° C., alternatively from 0° to 50° C., alternatively from -50° to 50° C., alternatively from -50° to 30° C., an inert atmosphere (e.g., nitrogen, helium, or argon gas free of water and $O_2$), reactants that are free of water and $O_2$ and having a purity from 90% to 100%, amounts of reactants for minimizing waste/maximizing product yield, stirring or mixing reactants, and a reaction time period from 1 minute to 24 hours.

Effective reaction conditions for making the bimodal ligand-metal catalyst. Such conditions may comprise techniques for manipulating air-sensitive and/or moisture-sensitive reagents and reactants such as Schlenk-line techniques and an inert gas atmosphere (e.g., nitrogen, helium, or argon). Effective reaction conditions may also comprise a sufficient reaction time, a sufficient reaction temperature, and a sufficient reaction pressure. Each reaction temperature independently may be from -78° to 120° C, alternatively from -30° to 30° C. Each reaction pressure independently may be from 95 to 105 kPa, alternatively from 99 to 103 kPa. Progress of any particular reaction step may be monitored by analytical methods such as nuclear magnetic resonance (NMR) spectroscopy, mass spectrometry to determine a reaction time that is effective for maximizing yield of intended product. Alternatively, each reaction time independently may be from

30 minutes to 48 hours.

**The unimodal ligand-metal precatalyst (e.g., the unimodal ligand-metal precatalyst of formula (I)).** The unimodal ligand-metal precatalyst may be synthesized according to methods known in the art, including those methods referenced herein. Alternatively, the unimodal ligand-metal precatalyst may be obtained from a precatalyst supplier such as Boulder Scientific.

The metallocene catalyst can be various types of metallocene catalysts such as those described in WO2014149360A1. In some aspects the unimodal ligand-metal precatalyst is selected from bis($\eta^5$-tetramethylcyclopentadienyl)zirconium dichloride; bis($\eta^5$-tetramethylcyclopentadienyl)zirconium dimethyl; bis($\eta^5$-pentamethylcyclopentadienyl)zirconium dichloride; bis($\eta^5$-pentamethylcyclopentadienyl)zirconium dimethyl; (1,3-dimethyl-4,5,6,7-tetrahydroindenyl)(1-methylcyclopentadienyl)zirconium dimethyl; bis(1-methyl-3-n-butylcyclopentadienyl)zirconium dichloride; bis(1-methyl-3-n-butylcyclopentadienyl)zirconium dimethyl; bis(n-propylcyclopentadienyl)hafnium dichloride; bis(n-propylcyclopentadienyl)hafnium dimethyl; bis(n-butylcyclopentadienyl)zirconium dichloride; (cyclopentadienyl)(1,5-dimethylindenyl)zirconium dimethyl; (methylcyclopentadienyl)(1,5-dimethylindenyl)zirconium dimethyl; (cyclopentadienyl)(1,4-dimethylindenyl)zirconium dimethyl; (methylcyclopentadienyl)(1,4-dimethylindenyl)zirconium dimethyl; and bis(n-butylcyclopentadienyl)zirconium dimethyl. In some aspects the bimodal ligand-metal catalyst is a product of an activation reaction of an activator and any one of the aforementioned unimodal ligand-metal precatalyst.

**Polyolefin polymer made by the method of polymerizing.** When the 1-alkene monomer is the combination of ethylene and propylene, the polyolefin polymer made therefrom is an ethylene/propylene copolymer. When the 1-alkene monomer is ethylene alone, the polyolefin polymer made therefrom is a polyethylene homopolymer. When the 1-alkene monomer is the combination of ethylene and 1-butene, 1-hexene, or 1-octene, the polyolefin polymer made therefrom is a poly(ethylene-co-1-butene) copolymer, a poly(ethylene-co-1-hexene) copolymer, or a poly(ethylene-co-1-octene) copolymer. In some embodiments the polyolefin polymer made from the 1-alkene monomer is an ethylene-based polymer having from 50 to 100 weight percent (wt%) repeat units derived from ethylene and from 50 to 0 wt% repeat units derived from a 1-alkene monomer selected from propylene, 1-butene, 1-hexene, 1-octene, and the combination of any two or more thereof.

In some embodiments the polymerization method uses the 1-alkene monomer and a comonomer that is a diene monomer (e.g., 1,3-butadiene). When the 1-alkene monomer is a combination of ethylene and propylene and the polymerization also uses a diene monomer, the polyolefin polymer is an ethylene/propylene/diene monomer (EPDM) copolymer. The EPDM copolymer may be an ethylene/propylene/1,3-butadiene copolymer.

**The multimodal (e.g., bimodal or trimodal) catalyst system.** The bimodal catalyst system comprises the bimodal ligand-metal catalyst. The trimodal catalyst system comprises the bimodal ligand-metal catalyst, a second unimodal ligand-metal catalyst (e.g., a metallocene-type catalyst) made from the second unimodal ligand-metal precatalyst and the activator. The multimodal catalyst system makes in a single reactor a multimodal polyethylene composition comprising an HMW polyethylene component and an LMW polyethylene component.

The method of making the bimodal ligand-metal catalyst may be performed in the presence of the metallocene catalyst or a metallocene precatalyst. When performed in the presence of the metallocene precatalyst, the method of activating the precatalyst of formula (I) with an activator further comprises activating the metallocene precatalyst with a same or different activator. Typically, the method of making the bimodal ligand-metal catalyst is performed in the absence of a metallocene (pre)catalyst.

**Unsupported or supported catalyst.** The unimodal ligand-metal precatalyst of formula (I), the unimodal ligand-metal catalyst, the bimodal ligand-metal catalyst, and the multimodal catalyst system independently may be unsupported or disposed on a solid particulate support material. When the support material is absent, the unimodal ligand-metal precatalyst of formula (I), the unimodal ligand-metal catalyst, the bimodal ligand-metal catalyst, and the multimodal catalyst system may be injected into a slurry-phase or gas-phase polymerization reactor as a solution in a hydrocarbon solvent. When the unimodal ligand-metal precatalyst of formula (I), the unimodal ligand-metal catalyst, the bimodal ligand-metal catalyst, and the multimodal catalyst system is/are disposed on the support material, they may be injected into the slurry-phase or gas-phase polymerization reactor as a slurry suspended in the hydrocarbon solvent or as a dry, powder (i.e., dry particulate solid).

The unimodal ligand-metal catalyst (made from the unimodal ligand-metal precatalyst) and/or the bimodal ligand-metal catalyst may be premade in the absence of the support material and later disposed onto the support material. Alternatively, the unimodal ligand-metal precatalyst or the unimodal ligand-metal catalyst may be disposed onto the support material, and then the unimodal ligand-metal catalyst and/or the bimodal ligand-metal catalyst may be made *in situ* on the support material.

The unimodal ligand-metal precatalyst of formula (I), the unimodal ligand-metal catalyst, and/or the bimodal ligand-metal catalyst may be made by a concentrating method by evaporating a hydrocarbon solvent from a suspension or solution of the support material in a solution of the unimodal ligand-metal precatalyst of formula (I), the unimodal ligand-metal catalyst, and/or the bimodal ligand-metal catalyst, in the hydrocarbon solvent. Alternatively, the unimodal ligand-metal precatalyst of formula (I), the unimodal ligand-metal catalyst, and/or the bimodal ligand-metal catalyst may be made

by a spray-drying method by spray-drying the suspension or solution. In some embodiments, the spray-drying method is used.

**The support material.** The support material is a particulate solid that may be nonporous, semi-porous, or porous. A carrier material is a porous support material. Examples of support materials are talc, inorganic oxides, inorganic chloride, zeolites, clays, resins, and mixtures of any two or more thereof. Examples of suitable resins are polystyrene, functionalized or crosslinked organic supports, such as polystyrene divinyl benzene polyolefins. The support material independently may be an untreated silica, alternatively a calcined untreated silica, alternatively a hydrophobing agent-treated silica, alternatively a calcined and hydrophobing agent-treated silica. The hydrophobing agent may be dichlorodimethylsilane.

Inorganic oxide support materials include Group 2, 3, 4, 5, 13 or 14 metal oxides. The preferred supports include silica, which may or may not be dehydrated, fumed silica, alumina (see, for example, PCT Publication WO 99/60033), silica-alumina and mixtures thereof. Other useful supports include magnesia, titania, zirconia, magnesium chloride (U.S. Pat. No. 5,965,477), montmorillonite (EP 0 511 665), phyllosilicate, zeolites, talc, and clays (U.S. Pat. No. 6,034,187). Also, combinations of these support materials may be used, for example, silica-chromium, silica-alumina, and silica-titania. Additional support materials may include those porous acrylic polymers described in EP 0 767 184. Other support materials include nanocomposites as disclosed in PCT Publication WO 99/47598; aerogels as disclosed in PCT Publication WO 99/48605; spherulites as disclosed in U.S. Pat. No. 5,972,510; and polymeric beads as disclosed in PCT Publication WO 99/50311.

The support material may have a surface area in the range of from about 10 $m^2/g$ to about 700 $m^2/g$, a pore volume in the range of from about 0.1 $cm^3/g$ to about 4.0 $cm^3/g$, and average particle size in the range of from about 5 μm (microns) to about 500 μm (microns). The support material may be a silica (e.g., fumed silica), alumina, a clay, or talc. The fumed silica may be hydrophilic (untreated), alternatively hydrophobic (treated). In some aspects the support is a hydrophobic fumed silica, which may be prepared by treating an untreated fumed silica with a hydrophobing agent such as dimethyldichlorosilane, a polydimethylsiloxane fluid, or hexamethyldisilazane. In some aspects the treating agent is dimethyldichlorosilane. In one embodiment, the support is Cabosil™ TS-610.

One or more precatalysts and/or one or more activators may be deposited on, contacted with, vaporized with, bonded to, or incorporated within, adsorbed or absorbed in, or on, one or more support or carrier materials.

The unimodal ligand-metal precatalyst may be spray dried according to the general methods described in US5648310. The support used with the bimodal ligand-metal catalyst may be functionalized, as generally described in EP 0 802 203, or at least one substituent or leaving group is selected as described in US5688880.

Solution phase polymerization and/or slurry phase polymerization of olefin monomer(s) are well-known. See for example US8291115B2.

**Inert hydrocarbon solvent.** An alkane, an arene, or an alkylarene (i.e., arylalkane). Examples of inert hydrocarbon solvents are alkanes such as mineral oil, pentanes, hexanes, heptanes, octanes, nonanes, decanes, undecanes, dodecanes, and toluene, and xylenes. In one embodiment, the inert hydrocarbon solvent is an alkane, or a mixture of alkanes, wherein each alkane independently has from 5 to 20 carbon atoms, alternatively from 5 to 12 carbon atoms, alternatively from 5 to 10 carbon atoms. Each alkane independently may be acyclic or cyclic. Each acyclic alkane independently may be straight chain or branched chain. The acyclic alkane may be pentane, 1-methylbutane (isopentane), hexane, 1-methylpentane (isohexane), heptane, 1-methylhexane (isoheptane), octane, nonane, decane, or a mixture of any two or more thereof. The cyclic alkane may be cyclopentane, cyclohexane, cycloheptane, cyclooctane, cyclononane, cyclodecane, methycyclopentane, methylcyclohexane, dimethylcyclopentane, or a mixture of any two or more thereof. Additional examples of suitable alkanes include Isopar-C, Isopar-E, and mineral oil such as white mineral oil. In some aspects the inert hydrocarbon solvent is free of mineral oil. The inert hydrocarbon solvent may consist of one or more ($C_5$-$C_{12}$)alkanes.

**Gas-phase polymerization (GPP).** The polymerization uses a GPP reactor, such as a stirred-bed gas phase polymerization reactor (SB-GPP reactor) or a fluidized-bed gas-phase polymerization reactor (FB-GPP reactor). Such reactors and methods are generally well-known. For example, the FB-GPP reactor/method may be as described in any one of US 3,709,853; US 4,003,712; US 4,011,382; US 4,302,566; US 4,543,399; US 4,882,400; US 5,352,749; US 5,541,270; US 2018/0079836 A1; EP-A-0 802 202; and Belgian Patent No. 839,380. These SB-GPP and FB-GPP polymerization reactors and processes either mechanically agitate or fluidize by continuous flow of gaseous monomer and diluent the polymerization medium inside the reactor, respectively. Other useful reactors/processes contemplated include series or multistage polymerization processes such as described in US 5,627,242; US 5,665,818; US 5,677,375; EP-A-0 794 200; EP-B1-0 649 992; EP-A-0 802 202; and EP-B-634421

Gas phase polymerization operating conditions are any variable or combination of variables that may affect a polymerization reaction in the GPP reactor or a composition or property of a polyolefin polymer composition product made thereby. The variables may include reactor design and size; precatalyst composition and amount; reactant composition and amount; molar ratio of two different reactants; presence or absence of feed gases such as $H_2$, molar ratio of feed gases versus reactants, absence or concentration of interfering materials (e.g., $H_2O$ and/or $O_2$), absence or presence of an

induced condensing agent (ICA), average polymer residence time in the reactor, partial pressures of constituents, feed rates of monomers, reactor bed temperature (e.g., fluidized bed temperature), nature or sequence of process steps, time periods for transitioning between steps. Variables other than that/those being described or changed by the method or use may be kept constant.

In a GPP method, control individual flow rates of ethylene ("$C_2$"), hydrogen ("$H_2$") and 1-hexene ("$C_6$" or "$C_x$" wherein x is 6) to maintain a fixed comonomer to ethylene monomer gas molar ratio or feed mass ratio ($C_x/C_2$, e.g., $C_6/C_2$) equal to a described value (e.g., 0.004 or 0.0016), a constant hydrogen to ethylene gas molar ratio or feed mass ratio ("$H_2/C_2$") equal to a described value (e.g., 0.0011 or 0.0068), and a constant ethylene ("$C_2$") partial pressure equal to a described value (e.g., 1,000 kPa). Measure concentrations of gases by an in-line gas chromatograph to understand and maintain composition in the recycle gas stream. Maintain a reacting bed of growing polymer particles in a fluidized state by continuously flowing a make-up feed and recycle gas through the reaction zone. Use a superficial gas velocity of 0.49 to 0.79 meter per second (m/sec) (1.6 to 2.6 feet per second (ft/sec)). Operate the FB-GPP reactor at a total pressure of about 2068 to about 2758 kilopascals (kPa) (about 300 to about 400 pounds per square inch-gauge (psig)) and at a described first reactor bed temperature RBT. Maintain the fluidized bed at a constant height by withdrawing a portion of the bed at a rate equal to the rate of production of particulate form of the polyolefin polymer composition, which production rate may be from 5,000 to 150,000 kilograms per hour (kg/hour). Remove the product polyolefin polymer composition semi-continuously via a series of valves into a fixed volume chamber, wherein this removed multimodal (e.g., bimodal or trimodal) ethylene-co-1-hexene copolymer composition is purged to remove entrained hydrocarbons and treated with a stream of humidified nitrogen ($N_2$) gas to deactivate any trace quantities of residual catalyst.

The catalyst system may be fed into the polymerization reactor(s) in "dry mode" or "wet mode", alternatively dry mode, alternatively wet mode. The dry mode is a dry powder or granules. The wet mode is a suspension in an inert liquid such as mineral oil.

**Induced condensing agent (ICA).** An inert liquid useful for cooling materials in GPP reactor(s). Its use is optional. The ICA may be a ($C_3$-$C_{20}$)alkane, alternatively a ($C_5$-$C_{20}$)alkane, e.g., 2-methylbutane (i.e., isopentane). See US 4,453,399; US 4,588,790; US 4,994,534; US 5,352,749; US 5,462,999; and US 6,489,408. ICA concentration in reactor may be from 0.1 to 25 mol%, alternatively from 1 to 16 mol%, alternatively from 1 to 10 mol%.

The GPP conditions may further include one or more additives such as a chain transfer agent or a promoter. The chain transfer agents are well known and may be alkyl metal such as diethyl zinc. Promoters are known such as in US 4,988,783 and may include chloroform, $CFCl_3$, trichloroethane, and difluorotetrachloroethane. Prior to reactor start up, a scavenging agent may be used to react with moisture and during reactor transitions a scavenging agent may be used to react with excess activator. Scavenging agents may be a trialkylaluminum. GPP may be operated free of (not deliberately added) scavenging agents. The GPP reactor/method may further include an amount (e.g., 0.5 to 200 ppm based on all feeds into reactor) of one or more static control agents and/or one or more continuity additives such as aluminum stearate or polyethyleneimine. The static control agent(s) may be added to the FB-GPP reactor to inhibit formation or buildup of static charge therein.

The GPP reactor may be a commercial scale FB-GPP reactor such as a UNIPOL™ reactor or UNIPOL™ II reactor, which are available from Univation Technologies, LLC, a subsidiary of The Dow Chemical Company, Midland, Michigan, USA.

**1-Alkene monomer.** The 1-alkene monomer is a compound of formula $H_2C{=}C(H)(CH_2)_nR^8$, wherein subscript n is an integer from 0 to 19 and group $R^8$ is H or $CH_3$. Examples are ethylene (subscript n is 0 and $R^8$ is H), propylene (subscript n is 0 and $R^8$ is $CH_3$), and a ($C_4$-$C_{20}$)alpha-olefin (subscript n is an integer from 1 to 19 and $R^8$ is H or $CH_3$. In some embodiments the 1-alkene monomer is ethylene, propylene, 1-butene, 1-hexene, 1-octene, or a combination of any two or more thereof. In some embodiments the 1-alkene monomer is a combination of ethylene and propylene. In other embodiments the 1-alkene monomer is ethylene alone or a combination of ethylene and 1-butene, 1-hexene, or 1-octene.

**Polyolefin polymer.** A product of polymerizing at least one 1-alkene monomer with the bimodal ligand-metal catalyst or the multimodal catalyst system. A macromolecule, or collection of macromolecules, having constitutional units derived from the at least one 1-alkene monomer. For example, when the at least one 1-alkene monomer consists of ethylene, the polyolefin polymer consists of a polyethylene homopolymer. When the at least one 1-alkene monomer consists of ethylene and propylene, the polyolefin polymer consists of an ethylene/propylene copolymer. When the at least one 1-alkene monomer consists of ethylene and a comonomer selected from 1-butene, 1-hexene, and 1-octene, the polyolefin polymer is selected from a poly(ethylene-*co*-1-butene) copolymer, a poly(ethylene-*co*-1-hexene) copolymer, and a poly(ethylene-*co*-1-octene) copolymer, respectively.

The polyolefin polymer may be a homopolymer or a copolymer. The polyolefin polymer made from the multimodal catalyst system has a multimodal (e.g., bimodal or trimodal) molecular weight distribution and comprises a higher molecular weight (HMW) polyolefin polymer component and a lower molecular weight (LMW) polyolefin polymer component. The HMW polyolefin polymer component and the LMW polyolefin polymer component may be made by the bimodal ligand-metal catalyst.

Any compound, composition, formulation, material, mixture, or reaction product herein may be free of any one of

the chemical elements selected from the group consisting of: H, Li, Be, B, C, N, O, F, Na, Mg, Al, Si, P, S, Cl, K, Ca, Sc, Ti, V, Cr, Mn, Fe, Co, Ni, Cu, Zn, Ga, Ge, As, Se, Br, Rb, Sr, Y, Zr, Nb, Mo, Tc, Ru, Rh, Pd, Ag, Cd, In, Sn, Sb, Te, I, Cs, Ba, Hf, Ta, W, Re, Os, Ir, Pt, Au, Hg, Tl, Pb, Bi, lanthanoids, and actinoids; with the proviso that chemical elements required by the compound, composition, formulation, material, mixture, or reaction product (e.g., Zr required by a zirconium compound, or C and H required by a polyethylene, or C, H, and O required by an alcohol) are not counted.

Alternatively precedes a distinct embodiment. ASTM is the standards organization, ASTM International, West Conshohocken, Pennsylvania, USA. Any comparative example is used for illustration purposes only and shall not be prior art. Free of or lacks means a complete absence of; alternatively not detectable. IUPAC is International Union of Pure and Applied Chemistry (IUPAC Secretariat, Research Triangle Park, North Carolina, USA). Periodic Table of the Elements is the IUPAC version of May 1, 2018. May confers a permitted choice, not an imperative. Operative means functionally capable or effective. Optional(ly) means is absent (or excluded), alternatively is present (or included). Properties may be measured using standard test methods and conditions. Ranges include endpoints, subranges, and whole and/or fractional values subsumed therein, except a range of integers does not include fractional values. Room temperature: 23° ± 1° C.

Unless stated otherwise, definitions of terms used herein are taken from the IUPAC Compendium of Chemical Technology ("Gold Book") version 2.3.3 dated February 24, 2014. Some definitions are given below for convenience.

EXAMPLES

Additional inventive embodiments are the preceding aspects, and the claims described later, that describe a range for a process condition and/or a range for a material property, wherein in the additional inventive embodiments an endpoint of the process condition range and/or an endpoint of the material property range, respectively, is amended to any one exemplified process condition value and/or any one exemplified material property value, respectively, described below in this section for any one inventive example.

**Absence of an exogenous organometallic compound** means free of an external source of a metal atom-containing organic compound such as an external source of a catalyst that is different than the first unimodal ligand-metal precatalyst and free of a precatalyst that is different than the first precatalyst, i.e., free of means of making a second unimodal ligand-metal catalyst *in situ* in the combining step. Prior to the combining step the first unimodal ligand-metal precatalyst may be a constituent of a multimodal (e.g., bimodal) precatalyst system consisting essentially of the first unimodal ligand-metal precatalyst, a metallocene-type catalyst (an endogenous (pre-loaded, not exogenous) second unimodal ligand-metal catalyst), and, optionally, a support material.

**Additive** The catalyst systems or polymerization processes may optionally have at least additive. The at least one additive may be a flowability aid for preventing agglomeration of dry catalyst particles; an anti-static compound for inhibiting build-up of electrical charges on polyolefin particles in floating-bed gas phase polymerization reactors; or an anti-fouling compound such as a metal carboxylate salt for inhibiting reactor fouling.

**Bimodal** means a molecular weight distribution having two, and only two peaks as determined by GPC, wherein the two peaks can be a head and shoulder configuration or a two heads configuration having a local minimum (valley) therebetween. It can also refer to a catalyst that produces such a bimodal molecular weight distribution.

**Bimodal ligand-metal catalyst** means a catalyst that is made from a unimodal ligand-metal precatalyst, an activator, and a modality-increasing organic compound, which makes a polyolefin having a bimodal molecular weight distribution as determined by GPC in a single polymerization reactor in the absence of another catalyst. In the absence of the modality-increasing organic compound, activation of the unimodal ligand-metal precatalyst with the activator would have made a unimodal ligand-metal catalyst.

**Catalyst** herein means a material is that can polymerize a monomer and optionally a comonomer so as to make a polymer. The catalyst may be an olefin polymerization catalyst, which can polymerize an olefin monomer (e.g., ethylene) and optionally an olefin comonomer (e.g., propylene and/or a ($C_4$-$C_{20}$)alpha-olefin) so as to make a polyolefin homopolymer or, optionally, a polyolefin copolymer, respectively.

**Catalyst system** a set of at least two chemical constituents and/or reaction products thereof that together function as an integrated whole for enhancing rate of reaction, wherein at least one of the at least two chemical constituents is a catalyst. The other chemical constituent(s) may be independently selected from a different catalyst, a support material, excess amount of activator, a catalyst additive such as an anti-static agent, a co-catalyst, a carboxylate metal salt, a dispersant for preventing particles of the catalyst system from sticking together. The catalyst system may comprise a catalyst and a support material, wherein the catalyst is disposed on the support material, which hosts and provides a physical framework for increasing surface distribution of the catalyst. Catalyst system does not include a monomer, a comonomer, or the modality-increasing organic compound.

**Chemical conversion.** The bimodal ligand-metal catalyst is made by way of a chemical reaction. The chemical reaction takes place between the first unimodal ligand-metal precatalyst, the activator, and the modality-increasing organic compound. That is, the bimodal ligand-metal catalyst is made by chemically converting the first unimodal ligand-metal precatalyst into a ligand-metal catalyst having bimodal polymer producing functionality. The bimodal ligand-metal

catalyst is not made by a simple additive method whereby two different catalysts are combined together, such as by admixing the first unimodal ligand-metal precatalyst and the activator with a second unimodal ligand-metal precatalyst. When the second unimodal ligand-metal precatalyst is present during the combining step, that is in the first bimodal catalyst system, the second unimodal ligand-metal precatalyst is a bystander in the chemical conversion affecting modality. The modality-increasing organic compound is free of a metal atom. Therefore, it is quite surprising that the modality-increasing organic compound is capable of increasing the modality of a catalyst made from the first unimodal ligand-metal precatalyst.

**Consisting essentially of** means free of an exogenous organometallic compound. The exogenous organometallic compound is compositionally different than the first unimodal ligand-metal precatalyst. The second precatalyst is compositionally different than the first precatalyst used to make the first unimodal ligand-metal precatalyst. Thus, the inventive method is not achieved by adding an exogenous organometallic compound or second precatalyst precursor thereof to the first unimodal ligand-metal precatalyst. Thus, the contacting step of the method is performed in the absence of the exogenous organometallic compound or second precatalyst precursor thereof. The inventive method is also not achieved by removing a selective catalyst poison from a semi-poisoned bimodal ligand-metal catalyst. The first and second unimodal ligand-metal precatalysts are endogenous organometallic compounds and are not self-modifying such that they cannot increase modality of themselves or each other. In the absence of the modality-increasing organic compound, there is no modality increase.

**Endogenous.** Having an internal cause or origin, or pre-loaded.

**Exogenous.** Having an external cause or origin, or obtaining from an external source.

**Feeding.** Conveying or physically moving a material from outside of a space (e.g., outside a polymerization reactor) to the inside of the space (inside a polymerization reactor).

**First unimodal ligand-metal precatalyst.** Means a transition metal compound that, when it is free of (is not in contact with) a modality-increasing organic compound, upon contact with an activator, makes a unimodal ligand-metal catalyst. The first unimodal ligand-metal catalyst makes unimodal polymer, and thus if a bimodal polymer is desired the first unimodal ligand-metal precatalyst is in need of being chemically converted into a bimodal ligand-metal catalyst. The inventive method can beneficially accomplish such a chemical conversion without using an exogenous organometallic compound to do the chemical conversion. This is done by contacting the first unimodal ligand-metal precatalyst with a first activator and a modality-increasing organic compound, thereby making the bimodal ligand-metal catalyst.

**GPC** means gel permeation chromatography.

**Internal alkene** means an alkene which is not terminal, i.e., the carbon-carbon pi bond is not at the end of the carbon chain. That is, an internal alkene does not have a terminal carbon-carbon double bond or a terminal carbon-carbon triple bond.

**Leaving group.** A group bonded to the metal atom of a ligand-metal precatalyst and abstracted by an activator during the activation of the precatalyst to the ligand-metal catalyst. Examples of leaving groups are the monodentate group X in structural formula (I). Each ligand-metal precatalyst described herein implicitly has at least one leaving group, and typically two leaving groups.

**Ligand.** A monovalent, divalent, trivalent, or tetravalent and dicoordinate, tricoordinate or tetracoordinate organic group having two, three, or four, respectively coordinating functional groups for bonding to the metal atom of a ligand-metal precatalyst. The ligand remains coordinated to the metal atom in the ligand-metal catalyst made by activating the precatalyst. Thus, ligand indicates a group in a ligand-metal precatalyst that is carried over to the ligand-metal catalyst made by activating the precatalyst, whereas a leaving group indicates a labile group at least one of which is abstracted by the activator during the activating of the precatalyst. An example of the ligand is the BPP-type ligand, which is a divalent, tetracoordinate organic group.

**Metal atom** means a basic unit of any one of the following elements: of Groups 1 to 13, of rows 3 to 6 of Groups 14 to 16, of rows 5 and 6 of Group 17, of the lanthanides, and of the actinides, all of the Periodic Table of the Elements published by IUPAC on December 1, 2018.

**"Modality-increasing or increase modality** means transforming a molecular weight distribution of a polyolefin polymer made by an olefin polymerization catalyst by adding at least one, alternatively only one, modality thereto. Examples of modality-increasing are adding one modality to a unimodal molecular weight distribution to give a bimodal molecular weight distribution; adding one modality to a bimodal molecular weight distribution to give a trimodal molecular weight distribution; or adding two modalities to a unimodal molecular weight distribution to give a trimodal molecular weight distribution. Thus, an example of adding one modality to a unimodal ligand-metal catalyst to make a bimodal ligand-metal catalyst is adding one modality to an olefin polymerization catalyst that makes a polyolefin polymer having a unimodal molecular weight distribution (i.e., the unimodal ligand-metal catalyst is a unimodal olefin polymerization catalyst) to give an olefin polymerization catalyst that makes a polyolefin polymer having a bimodal molecular weight distribution (i.e., the bimodal ligand-metal catalyst is a bimodal olefin polymerization catalyst). Typically modality-increasing means the adding one modality to a unimodal molecular weight distribution to give a bimodal molecular weight distribution.

**Modality-increasing organic compound** means a non-catalytic, metal-free carbon-based molecule consisting

of carbon atoms, hydrogen atoms, optionally zero, one or more halogen atoms, and optionally zero, one or more heteroatoms independently selected from O, N, P, and Si; wherein the molecule contains at least one internal carbon-carbon double bond (C-C=C-C), one allenic group (C=C=C), or at least one carbon-carbon triple bond (HC≡CH, HC≡C-C, or C-C≡C-C) and functions to chemically convert a molecular structure of a first unimodal ligand-metal precatalyst into a bimodal ligand-metal catalyst. The modality-increasing organic compound *per se* is free of a metal atom. Because it is known that polymerizable olefin monomers such as ethylene, an alpha-olefin such as propylene or a ($C_4$-$C_{20}$)alpha-olefin, a 1,#-diene, wherein # is an integer of 3 or higher, do not increase modality of a molecular weight distribution of a polyolefin polymer made by an olefin polymerization catalyst (whether unimodal, bimodal, trimodal), by definition, therefore, "modality-increasing organic compound" excludes polymerizable olefin monomers (e.g., alkenes having a terminal carbon-carbon double bond). The transformation beneficially may be accomplished in the absence of the exogenous organometallic compound and second precatalyst precursor thereof. The transformation beneficially may also be accomplished in the absence of a second activator.

**Multimodal** means a molecular weight distribution having two or more peaks as determined by GPC, wherein the two or more peaks independently can be a head and shoulder configuration or a two or more heads configuration having a local minimum (valley) therebetween. Examples of multimodal are bimodal and trimodal.. It can also refer to a catalyst that produces such a multimodal molecular weight distribution.

**Organic compound** means a chemical entity consisting of, per molecule, carbon atoms, hydrogen atoms, optionally zero, one or more halogen atoms, and optionally zero, one, or more heteroatoms independently selected from O, N, P, and Si. The molecule does not have, i.e. is free of, a metal atom (i.e., the chemical entity does not include organometallic compounds).

**Reaction conditions,** including polymerization conditions, are environmental circumstances such as temperature, pressure, solvent, and reactant concentrations like under which a chemical transformation (e.g., polymerization) proceeds. All chemical transformations described herein are conducted under suitable and effective reaction conditions.

**Short-chain branching distribution per 1000 carbon atoms** or **SCBD/1000C.** A function of a change in weight percent (wt%) comonomeric content of the bimodal copolymer versus log(weight-average molecular weight ($M_w$)) of the bimodal copolymer, as measured by GPC. May be visually detected by plotting wt% comonomeric content on a y-axis versus log($M_w$) on an x-axis, and examining the slope of the plot in a range from log($M_w$) 4 to log($M_w$) 6 (i.e., the range from $M_w$ 10,000 to $M_w$ 1,000,000). A normal SCBD/1000C is indicated by a negative (downward-trending) slope, indicating that has log($M_w$) increases, wt% of comonomer content decreases. A decreased normal SCBD/1000C means that the degree of negative slope is decreased (e.g., from a slope of -3 to a slope of -2). A flat SCBD/1000C is indicated by zero slope (flat trending), indicating that has log($M_w$) increases, wt% of comonomer content stays about the same. A reverse SCBD/1000C is indicated by a positive (upward trending) slope, indicating that has log($M_w$) increases, wt% of comonomer content increases. An enhanced reverse SCBD/1000C means that the degree of positive slope is increased (e.g., from a slope of +2 to a slope of +3).

**Support material** means a finely-divided, particulate inorganic solid capable of hosting a catalyst.

**Trimodal** means a molecular weight distribution having three, and only three peaks as determined by GPC. It can also refer to a catalyst that produces such a trimodal molecular weight distribution.

**Unimodal** means a molecular weight distribution having one, and only one peak as determined by GPC. It can also refer to a catalyst that produces such a unimodal molecular weight distribution.

**Unimodal ligand-metal catalyst** means a catalyst that makes a polyolefin having a unimodal molecular weight distribution as determined by GPC. Thus if a bimodal polymer is desired the first unimodal ligand-metal precatalyst is in need of being chemically converted into a bimodal ligand-metal catalyst. The prior art would do this by adding contacting a combination of the first unimodal ligand-metal precatalyst and an exogenous transition metal compound precatalyst with an activator so as to make a bimodal catalyst system comprising two or more different catalyst compounds. The inventive method can beneficially accomplish such a chemical conversion without using an exogenous transition metal compound precatalyst. That is, the inventive method can beneficially accomplish such as chemical conversion by combining in any order constituents consisting essentially of and/or consisting of a first unimodal ligand-metal precatalyst, an effective amount of an activator, and an effective amount of a modality-increasing organic compound under conditions effective for the activator and the modality-increasing organic compound to chemically convert the first unimodal ligand-metal precatalyst into a bimodal ligand-metal catalyst.

**Unsupported** means free of an inorganic support material (e.g., silica).

Methods of chemically converting a unimodal ligand-metal precatalyst into a bimodal ligand-metal catalyst are described herein. The bimodal ligand-metal catalyst and/or a catalyst system (e.g., a bimodal catalyst system and/or a trimodal catalyst system) including at least the bimodal ligand-metal catalyst can be employed in a single polymerization reactor to make multimodal polymers as described herein.

Modality-increasing organic compounds of formula ($A^1$), ($B^1$), or ($C^1$): $R^5$-C≡C-$R^6$ ($A^1$), $(R^5)_2C=C=C(R^6)_2$ ($B^1$), or $(R^5)(R^7)C=C(R^6)(R^7)$ ($C^1$), as detailed herein, are provided as follows. Modality-increasing organic compounds (MIC1) is commercially available from Sigma-Aldrich. Modality-increasing organic compounds (MIC8) is commercially available

from Sigma-Aldrich. Modality-increasing organic compounds (MIC15) is commercially available from Sigma-Aldrich.

Synthesize unimodal ligand-metal precatalyst structure (1) according to the procedure of WO 2012/027448 A1.

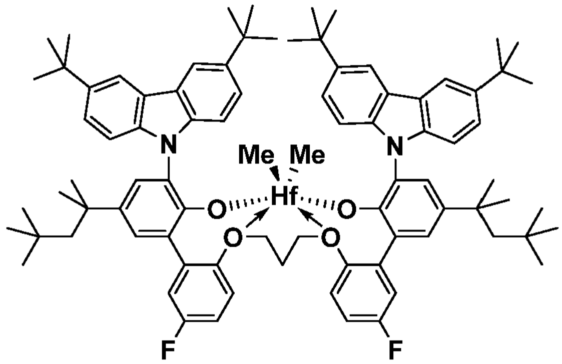

(Precatalyst 1)

Synthesize unimodal ligand-metal precatalyst structure (2) according to WO2018170227 A1.

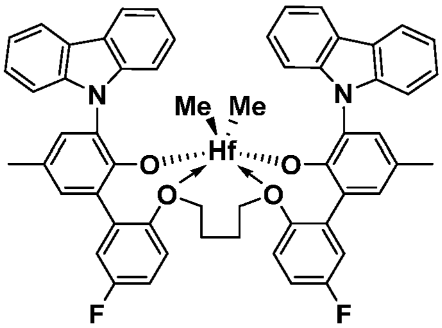

(Precatalyst 2)

The bimodal ligand-metal catalysts of Inventive examples 1-3 (IE1-3) were prepared as follows. In a nitrogen-purged glove box an oven-dried glass bottle was charged with 0.795 gram (g) of treated fumed silica (CABOSIL TS-610; available from W.R. Grace) slurried in 22.5 g of toluene (available from Aldrich), and stirred with a stir bar until well dispersed. 6.6 g of a 10% solution by weight of methylaluminoxane (MAO)(available from W.R. Grace as 10 wt% in toluene) was added to the bottle to form a mixture. The mixture was stirred magnetically for 15 minutes, then the unimodal ligand-metal catalyst of structure (1)(0.096 g) and the modality-increasing organic compound of structure (MIC15) (1 equivalent; 0.096 g) was added and the mixture was stirred for 30-60 minutes. The mixture was spray-dried using a Buchi Mini Spray Dryer B-290 with the following parameters to yield the dried and activated bimodal ligand-metal catalyst of Ex1: Set Temperature - 185 °C, Outlet Temperature - 100 °C (min.), Aspirator - 95 and Pump Speed - 150 rpm.

The unimodal ligand-metal catalyst of Comparative Example 4 (CE4) was prepared the same as the bimodal ligand-metal catalyst of IE1-3 with the change that the modality-increasing organic compound was absent (not present in any amount), as indicated in Table 1.

Inventive examples 4-6 (IE4-6) were prepared the same as IE1-3 with the change that the modality-increasing organic compound of structure (MIC15) was present at 5 equivalents, at the conditions as indicated in Table 1.

Inventive examples 7-9 (IE7-9) were prepared the same as IE1-3 with the change that the modality-increasing organic compound of structure (MIC8) was utilized at 5 equivalents, at the conditions as indicated in Table 1.

Inventive examples 10-11 (IE10-11) were prepared the same as IE1-3 with the change that the modality-increasing organic compound of structure (MIC1) was utilized at 5 equivalents, at the conditions as indicated in Table 1.

Inventive examples 12-13 (IE12-13) were prepared the same as IE1-3 with the change that the modality-increasing organic compound of structure (MIC1) was utilized at 10 equivalents, at the conditions as indicated in Table 1.

Inventive example 14 was prepared the same as Examples 1 with the change that the unimodal ligand-metal precatalyst of structure (2) was utilized at five equivalents (molar equivalents), at the conditions as indicated in Table 1.

The unimodal ligand-metal catalyst of Comparative Example 4 (CE4) was prepared the same as the bimodal ligand-metal catalyst of EX1-3 with the change that the unimodal ligand-metal precatalyst of structure (2) was utilized and the modality-increasing organic compound was absent (not present in any amount), at the conditions as indicated in Table

1.

Gas-phase ethylene/1-hexene copolymerizations of the bimodal ligand-metal catalysts of IE1-14 and the unimodal ligand-metal catalysts of CE1-4 were conducted in the gas-phase in a 2 liter (L) semi-batch autoclave polymerization reactor equipped with a mechanical agitator as follows. The reactor was first dried for 1 hour, charged with 200 g of sodium chloride (NaCl) and dried by heating at 100 °C under nitrogen for 30 minutes. After drying, 5 g of silica supported methylaluminoxane (SMAO) was introduced as a scavenger under nitrogen pressure. After adding the SMAO, the reactor was sealed and components were stirred. The reactor was then charged with hydrogen ($H_2$ preload, as indicated below for each of conditions 1, 2, and 3) and hexene ($C_6/C_2$ ratio, as indicated below for each of conditions 1, 2, and 3), then pressurized with ethylene at 0.69 MPa (100 pounds per square inch (psi)). Once the system reached a steady state, the type and amount of polymerization catalyst for each of IE1-14 and CE1-4 was charged into the reactor at 80 °C to start polymerization for each of the catalysts of IE1-14 and CE1-4. The reactor temperature was brought to 90 °C and set at this temperature throughout the 1 hour run. The runs were conducted at condition 1, 2, or 3, as identified in Table 1 and detailed below. At the end of the run, the reactor was cooled down, vented and opened. The resulting product mixture was washed with water and methanol, then dried.

The results for IE1-14 and CE1-4 are shown in Tables 1, 2, and 3.

For each batch reactor run, calculate catalyst activity/polymerization productivity as number of grams dried polyolefin product made per gram of catalyst added to reactor-hour (gPE/gcat-hr). Higher values of gPE/gcat-hr indicate higher catalyst activities/polymerization productivities.

Melt temperature (i.e., Tm) can be determined via Differential Scanning Calorimetry according to ASTM D 3418-08. For instance, using a scan rate of 10° C./min on a sample of 10 mg and using the second heating cycle.

*Mw, Mn and Mw/Mn* are determined by using a High Temperature Gel Permeation Chromatography (Polymer Laboratories), equipped with a differential refractive index detector (DRI). Three Polymer Laboratories PLgel 10μm Mixed-B columns are used. The nominal flow rate is 1.0 mL/min, and the nominal injection volume is 300 μL. The various transfer lines, columns, and differential refractometer (the DRI detector) are contained in an oven maintained at 160°C. Solvent for the experiment is prepared by dissolving 6 grams of butylated hydroxytoluene as an antioxidant in 4 liters of Aldrich reagent grade 1, 2, 4 trichlorobenzene (TCB). The TCB mixture is then filtered through a 0.1 μm Teflon filter. The TCB is then degassed with an online degasser before entering the GPC instrument. Polymer solutions are prepared by placing dry polymer in glass vials, adding the desired amount of TCB, then heating the mixture at 160 °C with continuous shaking for about 2 hours. All quantities are measured gravimetrically. The injection concentration is from 0.5 to 2.0 mg/ml, with lower concentrations being used for higher molecular weight samples. Prior to running each sample the DRI detector is purged. Flow rate in the apparatus is then increased to 1.0 ml/minute, and the DRI is allowed to stabilize for 8 hours before injecting the first sample. The molecular weight is determined by combining universal calibration relationship with the column calibration which is performed with a series of monodispersed polystyrene (PS) standards. The MW is calculated at each elution volume with following equation:

$$\log M_X = \frac{\log(K_X / K_{PS})}{a_X + 1} + \frac{a_{PS} + 1}{a_X + 1} \log M_{PS}$$

where the variables with subscript "X" stand for the test sample while those with subscript "PS" stand for PS. In this method, $a_{PS}$=0.67 and $K_{PS}$ =0.00017 while $a_X$ and $K_X$ are obtained from published literature. Specifically, *a*/*K* = 0.695/0.000579 for PE and 0.705/0.0002288 for PP. The concentration, c, at each point in the chromatogram is calculated from the baseline-subtracted DRI signal, $I_{DRI}$, using the following equation: $c = K_{DRI}I_{DRI} /(dn/dc)$

where $K_{DRI}$ is a constant determined by calibrating the DRI, and (dn/dc) is the refractive index increment for the system. Specifically, dn/dc = 0.109 for polyethylene. The mass recovery is calculated from the ratio of the integrated area of the concentration chromatography over elution volume and the injection mass which is equal to the pre-determined concentration multiplied by injection loop volume.

All molecular weights are reported in g/mol unless otherwise noted. In event of conflict between the GPC-DRI procedure and the "Rapid GPC," the GPC-DRI procedure immediately above shall be used. Further details regarding methods of determining Mw, Mn, MWD are described in US 2006/0173123 page 24-25, paragraphs [0334] to [0341].

Mp is the MW for the maxima, so with a bimodal polymer Mp-1 and Mp-2 are the respective local maxima of the bimodal polymer (of the HMW and LMW peaks), and Mp-1 > Mp-2. When the polymer is unimodal, or does not have two discrete local maxima, then Mp-1 = Mp-2 = Mp.

The spread of the bimodal polymer is given by (Mp-1) - (Mp-2).

Short Chain Branching/comonomer content (wt% c6) is determined using GPC, where the comonomer content incorporated in the polymers (weight %) is determined by rapid FT-IR spectroscopy on the dissolved polymer in a GPC measurement. For instance, comonomer content is determined with respect to polymer molecular weight by use of an infrared detector such as an IR5 detector in a gel permeation chromatography measurement, as described in Analytical

Chemistry 2014, 86(17), 8649-8656. "Toward Absolute Chemical Composition Distribution Measurement of Polyolefins by High-Temperature Liquid Chromatography Hyphenated with Infrared Absorbance and Light Scattering Detectors" by Dean Lee, Colin Li Pi Shan, David M. Meunier, John W. Lyons, Rongjuan Cong, and A. Willem deGroot. Analytical Chemistry 2014 86 (17), 8649-8656.

Molecular weight comonomer distribution index (MWCDI) and bimodal comonomer distribution index (BCDI). Each of MWCDI-1, MWCDI-2, and BCDI provide methods of quantifying the type (e.g., reverse) and degree of comonomer distribution.

Calculate MWCDI-1: Using the GPC instrument also equipped with a Precision Detectors (Amherst, MA), 2-angle laser light scattering detector Model 2040, a calibration for the IR5 detector ratios was performed using at least ten ethylene-based polymer standards (polyethylene homopolymer and ethylene/octene copolymers; narrow molecular weight distribution and homogeneous comonomer distribution) of known short chain branching (SCB) frequency (measured by the $^{13}C$ NMR Method, as discussed above), ranging from homopolymer (0 SCB/1000 total C) to approximately 50 SCB/1000 total C, where total C = carbons in backbone + carbons in branches. Each standard had a weight-average molecular weight from 36,000 g/mole to 126,000 g/mole, as determined by the GPC-LALS (LALS = laser-assisted light scattering) processing method described above. Each standard had a molecular weight distribution (Mw/Mn) from 2.0 to 2.5, as determined by the GPC-LALS processing method described above. Polymer properties for the SCB standards are shown in Table A.

Table A: SCB standards.

| Wt % Comonomer | IR5 Area ratio | SCB / 1000 Total C | Mw | Mw/Mn |
|---|---|---|---|---|
| 23.1 | 0.2411 | 28.9 | 37,300 | 2.22 |
| 14.0 | 0.2152 | 17.5 | 36,000 | 2.19 |
| 0.0 | 0.1809 | 0.0 | 38,400 | 2.20 |
| 35.9 | 0.2708 | 44.9 | 42,200 | 2.18 |
| 5.4 | 0.1959 | 6.8 | 37,400 | 2.16 |
| 8.6 | 0.2043 | 10.8 | 36,800 | 2.20 |
| 39.2 | 0.2770 | 49.0 | 125,600 | 2.22 |
| 1.1 | 0.1810 | 1.4 | 107,000 | 2.09 |
| 14.3 | 0.2161 | 17.9 | 103,600 | 2.20 |
| 9.4 | 0.2031 | 11.8 | 103,200 | 2.26 |

For MWCDI, the "IR5 Area Ratio (or $IR5_{(Methyl}$ Channel Area) / $IR5_{(Measurement}$ Channel Area)) of "the baseline-subtracted area response of the IR5 methyl channel sensor" to "the baseline-subtracted area response of IR5 measurement channel sensor" (standard filters and filter wheel as supplied by PolymerChar: Part Number IR5_FWM01 included as part of the GPC-IR instrument) was calculated for each of the "SCB" standards. A linear fit of the SCB frequency versus the "IR5 Area Ratio" was constructed in the form of the following Equation 4B: SCB/1000 total C = $A_0$ + [$A_1$ x $IR5_{(Methyl}$ Channel Area) / $IR5_{(Measurement\ Channel\ Area)}$] (Eqn. 4B), where $A_0$ is the "SCB/1000 total C" intercept at an "IR5 Area Ratio" of zero, and $A_1$ is the slope of the "SCB/1000 total C" versus "IR5 Area Ratio," and represents the increase in the "SCB/1000 total C" as a function of "IR5 Area Ratio."

For MWCDI, a series of "linear baseline-subtracted chromatographic heights" for the chromatogram generated by the "IR5 methyl channel sensor" was established as a function of column elution volume, to generate a baseline-corrected chromatogram (methyl channel). A series of "linear baseline-subtracted chromatographic heights" for the chromatogram generated by the "IR5 measurement channel" was established as a function of column elution volume, to generate a base-line-corrected chromatogram (measurement channel).

For MWCDI, the "IR5 Height Ratio" of "the baseline-corrected chromatogram (methyl channel)" to "the baseline-corrected chromatogram (measurement channel)" was calculated at each column elution volume index (each equally-spaced index, representing 1 data point per second at 1 ml/min elution) across the sample integration bounds. The "IR5 Height Ratio" was multiplied by the coefficient $A_1$, and the coefficient $A_0$ was added to this result, to produce the predicted SCB frequency of the sample. The result was converted into mole percent comonomer, as follows in Equation 5B: Mole Percent Comonomer = {$SCB_f$ / [$SCB_f$ + ((1000 - $SCB_f$* Length of comonomer) / 2)]} * 100 (Eqn. 5B), where "$SCB_f$" is the "SCB per 1000 total C", also written as "SCB/1000TC" in Tables below, and the "Length of comonomer" = 8 for octene, 6 for hexene, and so forth.

For MWCDI, each elution volume index was converted to a molecular weight value ($Mw_i$) using the method of

Williams and Ward (described above; Eqn. 1B). The "Weight Percent Comonomer *(y axis)"* was plotted as a function of Log($Mw_i$), and the slope was calculated between $Mw_i$ of 15,000 and $Mw_i$ of 10,000,000 g/mole (e.g., 257,000 to 9,550,000 g/mol) (end group corrections on chain ends were omitted for this calculation). A Microsoft EXCEL linear regression was used to calculate the slope between, and including, $Mw_i$ from 15,000 to 150,000 g/mole. This slope is defined as the molecular weighted comonomer distribution index (MWCDI = Molecular Weighted Comonomer Distribution Index).

Representative determination of MWCDI: A plot of the measured "SCB per 1000 total C (= $SCB_f$)" versus the observed "IR5 Area Ratio" of the SCB standards was generated, and the intercept ($A_0$) and slope ($A_1$) were determined to be $A_0$ = -90.246 SCB/1000 total C; and $A_1$ = 499.32 SCB/1000 total C. The "IR5 Height Ratio" was determined, and multiplied by the coefficient $A_1$. The coefficient $A_0$ was added to the result to produce the predicted SCB frequency ($SCB_f$) of the example, at each elution volume index, as described above ($A_0$ = -90.246 SCB/1000 total C; and $A_1$ = 499.32 SCB/1000 total C). The $SCB_f$ was plotted as a function of polyethylene-equivalent molecular weight, as determined using Equation 1. The $SCB_f$ was converted into "Mole Percent Comonomer" via Equation 5B. The "Mole Percent Comonomer" was plotted as a function of polyethylene-equivalent molecular weight, as determined using Equation 1B. A linear fit was from Mwi of 15,000 g/mole to Mwi of 150,000 g/mole, yielding a slope of "2.27 mole percent comonomer x mole/g." Thus, the MWCDI = 2.27. An EXCEL linear regression was used to calculate the slope between, and including, Mwi from 15,000 to 150,000 g/mole.

Calculate MWCDI -2: MWCDI -2 is calculated as described in WO 2019246069.

Calculate BCDI: BCDI is the ratio of MWCDI-2 and MWCDI-1 and weighted by the difference in the comonomer content of the high molecular weight component measured at HMW-Mw and the comonomer content of the low molecular weight component measured at LMW-Mw in wt%, and the molecular weight distribution (MWD) given by Mw/Mn, and is given by the equation:

BCDI = [|(MWCDI-2)|/(MWCDI-1)] x |ΔC6| x MWD, where ΔC6 is the difference in comonomer measured at HMW-Mw and measured at LMW-Mw (described in WO 2019246069), given in wt% C6. As detailed herein, BCDI values are greater for the bimodal catalyst made with the MIOC than for the unmodified precatalyst. For instance, the modified precatalysts herein can have resultant BCDI values of greater than 4, greater than 5, greater than 6 or greater than 8, whereas the unmodified catalyst (unimodal catalyst) can have a BCDI value of less than 4.

Condition 1 is as follows: Injection temperature = 80 °C; Reaction temperature = 90 °C Ethylene = 1.59 MPa (230 pounds per square inch (psi)); $H_2/C_2$ = 0.0068; $C_6/C_2$ = 0.004.

Condition 2 is as follows: Injection temperature = 80 °C; Reaction temperature = 90 °C Ethylene = 0.79 MPa (115 pounds per square inch (psi)); $H_2/C_2$ = 0.0011; $C_6/C_2$ = 0.016.

Condition 3 is as follows: Injection temperature = 80 °C; Reaction temperature = 90 °C Ethylene = 1.59 MPa (230 pounds per square inch (psi)); $H_2/C_2$ = 0.0011; $C_6/C_2$ = 0.016.

Table 1

| | Precatalyst structure | modality-increasing organic compound (structure) | Ratio | Condition |
|---|---|---|---|---|
| CE1 | 1 | None | N/A | 1 |
| CE2 | 1 | None | N/A | 2 |
| CE3 | 1 | None | N/A | 3 |
| IE1 | 1 | (MIC15) | 1:1 | 1 |
| IE2 | 1 | (MIC15) | 1:1 | 2 |
| IE3 | 1 | (MIC15) | 1:1 | 3 |
| IE4 | 1 | (MIC15) | 1:5 | 1 |
| IE5 | 1 | (MIC15) | 1:5 | 2 |
| IE6 | 1 | (MIC15) | 1:5 | 3 |
| IE7 | 1 | (MIC8) | 1:5 | 1 |
| IE8 | 1 | (MIC8) | 1:5 | 2 |
| IE9 | 1 | (MIC8) | 1:5 | 3 |
| IE10 | 1 | (MIC1) | 1:5 | 1 |
| IE11 | 1 | (MIC1) | 1:5 | 3 |
| IE12 | 1 | (MIC1) | 1:10 | 1 |
| IE13 | 1 | (MIC1) | 1:10 | 2 |

(continued)

| | Precatalyst structure | modality-increasing organic compound (structure) | Ratio | Condition |
|---|---|---|---|---|
| CE4 | 2 | None | N/A | 3 |
| IE14 | 2 | (MIC15) | 1:5 | 3 |

Table 2

| Ex. No. | Catalyst charge (mg) | Yield (g) | Productivity (gPE/gcat) | Mn | Mw | Mz | Mw/ Mn | Mz/ Mw | wt% C6 |
|---|---|---|---|---|---|---|---|---|---|
| CE1 | 19.6 | 31.6 | 1612 | 189,081 | 683,183 | 2,296,428 | 3.6 | 3.4 | 8.3 |
| CE2 | 20.3 | 20.4 | 1005 | 131,897 | 559,025 | 1,825,374 | 4.2 | 3.3 | 33.4 |
| CE3 | 20.5 | 43.4 | 2117 | 94,476 | 452,732 | 1,722,036 | 4.8 | 3.8 | 30.3 |
| IE1 | 20.5 | 43.8 | 2137 | 78,378 | 493,915 | 2,911,979 | 6.3 | 5.9 | 6.53 |
| IE2 | 20.6 | 28.4 | 1377 | 74,902 | 381,640 | 1,652,715 | 5.1 | 4.3 | 21.4 |
| IE3 | 20.4 | 80.4 | 3940 | 58,810 | 278,109 | 1,590,385 | 4.7 | 5.7 | 13.6 |
| IE4 | 41.8 | 24.6 | 588 | 15,036 | 506,804 | 1,466,098 | 33.7 | 2.9 | 7.6 |
| IE5 | 40.9 | 36.4 | 890 | 47,844 | 344,559 | 1,513,054 | 7.2 | 4.4 | 23.2 |
| IE6 | 40.4 | 76.4 | 1891 | 36,483 | 229,281 | 1,163,283 | 6.3 | 5.1 | 19.5 |
| IE7 | 42 | 10.0 | 238 | 36,675 | 607,388 | 2,124,869 | 16.6 | 3.5 | 8.0 |
| IE8 | 41.5 | 12.8 | 308 | 36,321 | 372,559 | 2,945,042 | 10.3 | 7.9 | 26.1 |
| IE9 | 41.2 | 37.4 | 908 | 27,165 | 382,290 | 2,598,128 | 14.1 | 6.8 | 25.6 |
| IE10 | 40.4 | 27.4 | 678 | 104,649 | 672,646 | 2,312,434 | 6.4 | 3.4 | 8.1 |
| IE11 | 41.1 | 17.2 | 418 | 39,096 | 369,113 | 2,281,105 | 9.4 | 6.2 | 28.7 |
| IE12 | 101.1 | 20.0 | 198 | 57,928 | 728,753 | 2,868,466 | 12.6 | 3.9 | 8.7 |
| IE13 | 102.3 | 6.2 | 61 | 47,654 | 449,227 | 2,810,478 | 9.4 | 6.3 | 28.5 |
| CE4 | 10.1 | 30.6 | 3030 | 443,250 | 1,422,312 | 2,611,631 | 3.2 | 2.5 | 28.1 |
| IE14 | 10.2 | 5.4 | 529 | 76,864 | 1,212,734 | 2,538,933 | 15.8 | 2.9 | 30.5 |

Table 3

| Ex. No.. | Multimodal Molecular Weight | | | Multimodal MW/Comonomer distribution | | | |
|---|---|---|---|---|---|---|---|
| | Mp1 (kDa) | Mp2 (kDa) | Mp1-Mp2 (kDA) | MWCDI -1 wt% | MWCDI -2 wt% | ΔC6 (wt% C6) | BCDI |
| CE 1 | 457 | n/a | n/a | 0.96 | 1.18 | 0.8 | 3.4 |
| CE 2 | 339 | n/a | n/a | -6.54 | -6.06 | -5.0 | -19.6 |
| CE 3 | 398 | n/a | n/a | -1.10 | 0.52 | 0.4 | -0.9 |
| IE 1 | 398 | 129 | 269 | 2.92 | 5.43 | 4.7 | 54.5 |
| IE 2 | 347 | 129 | 218 | 6.59 | 10.28 | 8.7 | 69.2 |
| IE 3 | 282 | 93 | 189 | 2.57 | 3.78 | 3.0 | 21.2 |
| IE 4 | 525 | 8 | 517 | 1.60 | 2.44 | 2.1 | 106.2 |
| IE 5 | 389 | 63 | 326 | 6.64 | 13.34 | 13.5 | 195.6 |
| IE 6 | 389 | 58 | 332 | 7.36 | 9.20 | 8.8 | 69.1 |
| IE 7 | 479 | 8 | 471 | 0.94 | 1.65 | 1.1 | 32.0 |
| IE 8 | 398 | 129 | 269 | 8.38 | 13.14 | 13.8 | 221.7 |

(continued)

| Ex. No.. | Multimodal Molecular Weight | | | Multimodal MW/Comonomer distribution | | | |
|---|---|---|---|---|---|---|---|
| | Mp1 (kDa) | Mp2 (kDa) | Mp1-Mp2 (kDA) | MWCDI -1 wt% | MWCDI -2 wt% | ΔC6 (wt% C6) | BCDI |
| IE 9 | 324 | 34 | 290 | 10.84 | 15.64 | 18.8 | 381.4 |
| IE 10 | 479 | 9 | 469 | 0.46 | 0.91 | 0.6 | 7.9 |
| IE 11 | 437 | 43 | 394 | 4.66 | 6.50 | 7.2 | 94.7 |
| IE 12 | 447 | 43 | 394 | 0.41 | 0.95 | 0.7 | 19.8 |
| IE 13 | 302 | 50 | 252 | 2.53 | 4.99 | 4.8 | 88.6 |
| CE 4 | 794 | n/a | n/a | -1.23 | -1.46 | -1.0 | -3.7 |
| IE 14 | 955 | 26 | 929 | 0.93 | 0.41 | 0.3 | 1.8 |

Each of IE1-14 demonstrates the methods employing a modality-increasing organic compound surprisingly and unexpectedly chemically convert a unimodal ligand-metal precatalyst into a bimodal ligand-metal catalyst. That is, the modality-increasing organic compound (e.g., an acetylene) rather than having no impact or having deleterious impact on a catalyst (e.g., acting as a catalyst poison) as may have been expected based on conventional perception of such compounds, instead surprising and unexpectedly improved modality of catalysts made in the presence of the modality-increasing organic compound. That is, the multimodal polymers provided by the bimodal ligand-metal catalysts of IE1-14 are formed in a single polymerization reactor (e.g., a single gas-phase polymerization reactor) without help from any other polymerization catalyst (i.e., in the absence of any other polymerization catalyst), in contrast to other approaches that rely on multiple polymerization reactors and/or multiple polymerization catalysts to provide multimodal polymers, and in contrast to other polymerization catalysts (such as CE1, CE1, CE3, and CE4) that provide polymers having a unimodal distribution.

In addition, each of IE1-14 demonstrates the presence of a desired (e.g., reverse) comonomer distribution. A reverse comonomer distribution can be defined when the MWCDI > 0 and/or when a BCDI is greater than 4. For instance, a polymer has a reverse comonomer distribution when both MWCDI -1 and MWCDI -2 are > 0. Additionally, the MWCDI values and the BCDI values quantify the magnitude of the comonomer distribution. For instance, comparing two polymers that have MWCDI > 0, the polymer with the larger MWCDI value is defined to have a greater, i.e., increased, BOCD; in other words, the polymer with the larger MWCDI value has a greater (enhanced) reverse comonomer distribution. For instance, as reported in Table 1, polymer made with IE1-14 provides an increased BOCD (have greater MWCDI values) as compared to a polymer made with Comparative Example 1-4 (e.g., CE 1 has MWCDI-1 wt% and MWCDI-2 wt% = 0.96 and 1.18, respectively). Polymers with greater MWCDI can provide improved physical properties, such as improved film performance, as compared to polymers having a relatively lesser MWCDI.

## Claims

1. A method of chemically converting a unimodal ligand-metal precatalyst into a bimodal ligand-metal catalyst, the method comprising combining in any order constituents consisting essentially of a first unimodal ligand-metal precatalyst, an effective amount of an activator, and an effective amount of a modality-increasing organic compound under conditions effective for the activator and the modality-increasing organic compound chemically converting the first unimodal ligand-metal precatalyst into a bimodal ligand-metal catalyst, thereby making the bimodal ligand-metal catalyst; wherein the modality-increasing organic compound is of formula ($A^1$) or ($B^1$): $R^5$-C≡C-$R^6$ ($A^1$) or $(R^5)_2C=C=C(R^6)_2$ ($B^1$) wherein each of $R^5$ and $R^6$ independently is H or $R^7$ and each $R^7$ independently is a ($C_1$-$C_{20}$)hydrocarbyl, -C(=O)-O-(unsubstituted $C_1$-$C_{20}$)hydrocarbyl), a ($C_1$-$C_{19}$)heterohydrocarbyl, or a tri(($C_1$-$C_{20}$) hydrocarbyl)silyl, or two $R^7$ are taken together to form a ($C_3$-$C_8$)alkylene; with the proviso that each $R^7$ lacks a carbon-carbon double bond; wherein each ($C_1$-$C_{20}$)hydrocarbyl independently is unsubstituted or substituted with from 1 to 4 substituent groups $R^S$; wherein each substituent group $R^S$ is independently selected from halogen, unsubstituted ($C_1$-$C_5$)alkyl, -C≡CH, -OH, ($C_1$-$C_5$)alkoxy, -C(=O)-(unsubstituted ($C_1$-$C_5$)alkyl), $-NH_2$, -N(H)(unsubstituted ($C_1$-$C_5$) alkyl), -N(unsubstituted $(C_1$-$C_5$)alkyl$)_2$, -COOH, -C(=O)-$NH_2$, -C(=O)-N(H)(unsubstituted ($C_1$-$C_5$)alkyl), -C(=O)-N(unsubstituted ($C_1$-$C_5$)alkyl$)_2$, -S-(unsubstituted ($C_1$-$C_5$)alkyl), -S$(=O)_2$-(unsubstituted ($C_1$-$C_5$)alkyl), -S$(=O)_2$-$NH_2$, -S$(=O)_2$-N(H)(unsubstituted ($C_1$-$C_5$)alkyl), -S$(=O)_2$-N(unsubstituted ($C_1$-$C_5$)alkyl$)_2$, -C(=)S-(unsubstituted ($C_1$-$C_5$)alkyl) and -COO(unsubstituted ($C_1$-$C_5$)alkyl); and wherein the first unimodal ligand-metal precatalyst is a biphenylphenoxy-type (BPP-type) ligand-metal precatalyst of formula (I):

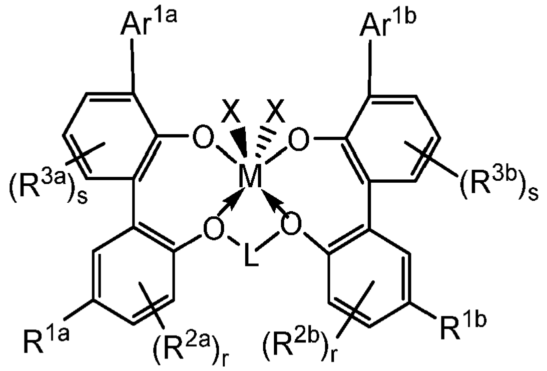

(I);

wherein L is a $CH_2CH_2$, $CH_2CH_2CH_2$, $CH_2CH_2CH_2CH_2$, $CH_2C(R^L)_2CH_2$, $CH_2CH(R^L)CH(R^L)CH_2$, $CH_2Ge(R^L)_2CH_2$, or $CH_2Si(R^L)_2CH_2$, wherein each $R^L$ independently is an unsubstituted ($C_1$-$C_{20}$)alkyl; M is Zr or Hf; each of $R^{1a}$ and $R^{1b}$ independently is F, ($C_1$-$C_{20}$)alkyl, or $Si(CH_3)_2(CH_2)_qCH_3$, wherein subscript q is an integer from 0 to 20; each subscript r independently is an integer from 0 to 3; each of $R^{2a}$ and $R^{2b}$ independently is H, F, Cl, ($C_1$-$C_5$)alkyl, or $R^{2a}$ and $R^{2b}$ may be bonded together to form a unsubstituted or substituted cycloalkyl group; each subscript s independently is an integer from 0 to 3; each of $R^{3a}$ and $R^{3b}$ independently is an unsubstituted ($C_1$-$C_{20}$)alkyl or ($C_1$-$C_{20}$)alkoxy; each $Ar^{1a}$ and $Ar^{1b}$ independently is an unsubstituted or substituted aromatic group selected from phenyl, substituted phenyl, biphenyl, substituted biphenyl, anthracene, substituted anthracene, carbazolyl, and substituted carbazolyl, wherein each substituent of the substituted aromatic group independently is alkyl; and each X independently is a monodentate group or each X is part of a multidentate (e.g., bidentate) group independently selected from a halogen atom, (($C_1$-$C_{20}$)alkyl)$_{3-g}$-(phenyl)$_g$Si- wherein subscript g is 0, 1, 2, or 3; $CH_3$, a ($C_2$-$C_{20}$)alkyl-$CH_2$, a ($C_6$-$C_{12}$)aryl-(($C_0$-$C_{10}$)alkylene)-$CH_2$ (e.g., benzyl when ($C_6$-$C_{12}$)aryl is phenyl and ($C_0$-$C_{10}$)alkylene is ($C_0$) alkylene), a ($C_1$-$C_6$)alkyl-substituted ($C_6$-$C_{12}$)aryl, a ($C_1$-$C_6$)alkoxy-substituted ($C_6$-$C_{12}$)aryl, a ($C_1$-$C_6$)alkoxy-substituted benzyl, and a ($C_1$-$C_6$)alkyl-substituted benzyl; or one X is a 4-($C_1$-$C_{20}$)alkyl-substituted 1,3-butadiene molecule and each of the remaining X, if any, independently is the monodentate group X.

2. The method of claim 1 wherein the modality-increasing organic compound is of formula ($A^1$): $R^5$-C≡C-$R^6$ ($A^1$) that is selected from phenylacetylene; a (substituted-phenyl)acetylene; diphenylacetylene; a substituted diphenylacetylene; a cycloalkylacetylene; an acetylene of formula HC≡CSi(phenyl)$_h$(($C_1$-$C_{20}$)alkyl)$_{3-h}$, wherein subscript h is an integer from 0 to 3; and an acetylene of formula HC≡C-$(CH_2)_mCH_3$, wherein subscript m is an integer from 1 to 15.

3. The method of claim 1 wherein the modality-increasing organic compound is of formula ($B^1$) $(R^5)_2C$=C=$C(R^6)_2$ ($B^1$) and is selected from a cycloalkylallene; an alkylallene; a dialkylallene; a trialkylallene; a trialkylsilylallene; a vinylidenecycloalkane; and an alkyl ester of an allenecarboxylic acid.

4. The method of claim 1 wherein the modality-increasing organic compound is selected from the group consisting of: cyclohexylallene; phenylacetylene; and 3,4-difluorophenylacetylene.

5. The method of any one of claims 1 to 4 wherein in the combining step either (i) the first unimodal ligand-metal precatalyst and bimodal ligand-metal catalyst are unsupported (i.e., free of a support material); or (ii) the first unimodal ligand-metal precatalyst is unsupported and the method further comprises, after the combining step, adding a support material to the bimodal ligand-metal catalyst so as to give a bimodal catalyst system, which comprises the support material and the bimodal ligand-metal catalyst.

6. The method of any one of claims 1 to 4 wherein in the combining step the first unimodal ligand-metal precatalyst and the bimodal ligand-metal catalyst are independently supported on a support material such that the combining step is performed in the presence of the support material and the method makes a bimodal catalyst system comprising the support material and the bimodal ligand-metal catalyst.

7. The method of any one of claims 1 to 4 comprising combining in any order constituents consisting essentially of the modality-increasing organic compound, the activator, and a bimodal precatalyst system that consists essentially of the first unimodal ligand-metal precatalyst, a second unimodal ligand-metal precatalyst that has a ligand that is different in composition than the ligand(s) of the first unimodal ligand-metal precatalyst, and a support material; wherein the method makes a trimodal catalyst system that consists essentially of the bimodal ligand-metal catalyst, a

second unimodal ligand-metal catalyst (e.g., a metallocene-type catalyst) made from the second unimodal ligand-metal precatalyst and the activator, and the support material.

**8.** The method of any one of claims 1 and 5 to 7 further comprising, during or after the combining step, contacting the bimodal ligand-metal catalyst (claim 1), the bimodal catalyst system (claim 5 or 6), or the trimodal catalyst system (claim 7) with ethylene and an alpha-olefin in a polymerization reactor under steady-state polymerizing conditions so as to make a poly(ethylene-co-alpha-olefin) copolymer having a bimodal molecular weight distribution ("bimodal copolymer"; claim 1, 5, or 6) or having a trimodal molecular weight distribution ("trimodal copolymer"; claim 7), as determined by gel permeation chromatography (GPC).

**9.** The method of claim 8 wherein a comparative unimodal poly(ethylene-co-alpha-olefin) copolymer made by contacting a first unimodal ligand-metal catalyst, made from the first unimodal ligand-metal precatalyst and activator in absence of the modality-increasing organic compound, with ethylene and the alpha-olefin under the same steady-state polymerization conditions has a normal short-chain branching distribution per 1000 carbon atoms (normal SCBD/1000C) and the bimodal copolymer or trimodal copolymer has a decreased normal SCBD/1000C; wherein the comparative unimodal poly(ethylene-*co*-alpha-olefin) copolymer has a normal SCBD/1000C and the bimodal copolymer or trimodal copolymer has a flat SCBD/1000C; wherein the comparative unimodal poly(ethylene-*co*-alpha-olefin) copolymer has a normal SCBD/1000C and the bimodal copolymer or trimodal copolymer has a reverse SCBD/1000C; or wherein the comparative unimodal poly(ethylene-*co*-alpha-olefin) copolymer has a reverse SCBD/1000C and the bimodal copolymer or trimodal copolymer has an enhanced reverse SCBD/1000C.

**10.** The method of claim 8 or 9 wherein a comparative unimodal poly(ethylene-*co*-alpha-olefin) copolymer made by contacting a first unimodal ligand-metal catalyst, made from the first unimodal ligand-metal precatalyst and activator in absence of the modality-increasing organic compound, with ethylene and the alpha-olefin under the same steady-state polymerization conditions has a molecular weight distribution ($M_w/M_n$) of x, wherein $M_w$ is weight-average molecular weight and $M_n$ is number-average molecular weight as measured by GPC, and the bimodal copolymer or trimodal copolymer has $M_w/M_n$ from 1.1x to 5.0x.

**11.** The method of claim 1 wherein the BPP-type ligand-metal precatalyst of structural formula (I) is any one of compounds (1) to (2):

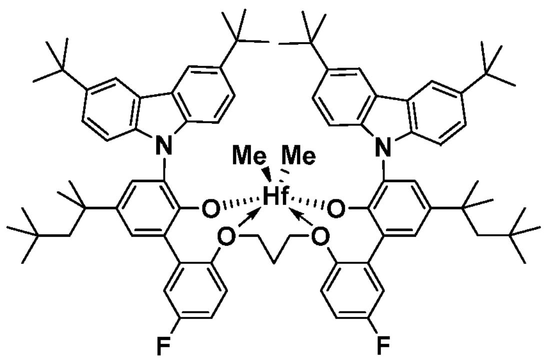
(1) and
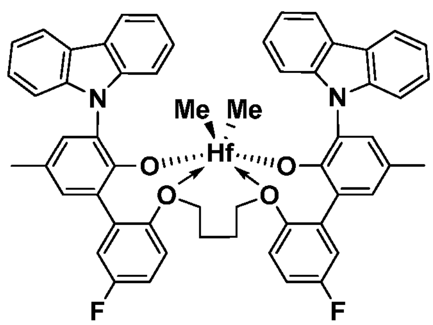
(2),

wherein each Me is methyl.

**12.** The method of any one of claims 1 to 11 wherein the metal of the first unimodal ligand-metal precatalyst is M, wherein the activator is an organoaluminum compound, and wherein the effective amount of the activator is an Al/M molar ratio of from 0.5 to 10,000, alternatively from 0.95 to 200, alternatively from 1.0 to 150, alternatively from 10 to 100; and/or wherein the effective amount of the modality-increasing organic compound comprises a molar ratio of modality-increasing organic compound-to-first unimodal ligand-metal precatalyst (MIOC/FUC molar ratio) of from 0.5:1.0 to 50.0:1.0, alternatively from 0.9:1.0 to 20.0:1.0, alternatively from 0.9:1.0 to 11:1.0, alternatively from 0.95:1.0 to 6:1.0.

**13.** A method of making a poly(ethylene-*co*-alpha-olefin) copolymer having a bimodal molecular weight distribution ("bimodal copolymer"), as determined by gel permeation chromatography (GPC), the method consisting essentially of contacting ethylene and an alpha-olefin with the bimodal ligand-metal catalyst made by the method of any one of claims 1 to 12 in a polymerization reactor under steady-state polymerizing conditions so as to make the bimodal copolymer.

## Patentansprüche

1. Verfahren zur chemischen Umwandlung eines unimodalen Ligand-Metall-Präkatalysators in einen bimodalen Ligand-Metall-Katalysator, wobei das Verfahren das Kombinieren in beliebiger Reihenfolge von Bestandteilen umfasst, die im Wesentlichen aus einem ersten unimodalen Ligand-Metall-Präkatalysator, einer wirksamen Menge eines Aktivators und einer wirksamen Menge einer modalitätserhöhenden organischen Verbindung bestehen, unter Bedingungen, die für den Aktivator und die modalitätserhöhende organische Verbindung wirksam sind, um den ersten unimodalen Ligand-Metall-Präkatalysator chemisch in einen bimodalen Ligand-Metall-Katalysator umzuwandeln, wodurch der bimodale Ligand-Metall-Katalysator hergestellt wird; wobei die modalitätserhöhende organische Verbindung die Formel ($A^1$) oder ($B^1$) ist: $R^5$-C≡C-$R^6$ ($A^1$) oder $(R^5)_2C=C=C(R^6)_2$ ($B^1$), wobei jedes $R^5$ und $R^6$ unabhängig voneinander H oder $R^7$ ist; und jedes $R^7$ unabhängig voneinander ein ($C_1$-$C_{20}$)-Hydrocarbyl, -C(=O)-O-(nicht substituiertes $C_1$-$C_{20}$)-Hydrocarbyl), ein ($C_1$-$C_{19}$)-Heterohydrocarbyl, oder ein tri(($C_1$-$C_{20}$)-Hydrocarbyl)silyl, oder zwei $R^7$ zusammen genommen werden, um ein ($C_3$-$C_8$)-Alkylen zu bilden; mit der Maßgabe, dass jedes $R^7$ keine Kohlenstoff-Kohlenstoff-Doppelbindung aufweist; wobei jedes ($C_1$-$C_{20}$)-Hydrocarbyl unabhängig voneinander nicht substituiert oder mit 1 bis 4 Substituentengruppen $R^S$ substituiert ist; wobei jede Substituentengruppe $R^S$ unabhängig voneinander ausgewählt ist aus Halogen, nicht substituiertem ($C_1$-$C_5$)-Alkyl, -C=CH, -OH, ($C_1$-$C_5$)-Alkoxy, -C(=O)-(nicht substituiertem ($C_1$-$C_5$)-Alkyl), $-NH_2$, -N(H)(nicht substituiertem ($C_1$-$C_5$)-Alkyl), -N(nicht substituiertem $(C_1$-$C_5)$-Alkyl$)_2$, -COOH, -C(=O)-$NH_2$, -C(=O)-N(H)(nicht substituiertem ($C_1$-$C_5$)-Alkyl), -C(=O)-N(nicht substituiertem $(C_1$-$C_5)$-Alkyl$)_2$, -S-(nicht substituiertem ($C_1$-$C_5$)-Alkyl), $-S(=O)_2$-(nicht substituiertem ($C_1$-$C_5$)-Alkyl), $-S(=O)_2-NH_2$, $-S(=O)_2$-N(H)(nicht substituiertem ($C_1$-$C_5$)-Alkyl), $-S(=O)_2$-N(nicht substituiertem $(C_1$-$C_5)$-Alkyl$)_2$, -C(=)S-(nicht substituiertem ($C_1$-$C_5$)-Alkyl) und -COO(nicht substituiertem ($C_1$-$C_5$)-Alkyl); und wobei der erste unimodale Ligand-Metall-Präkatalysator ein Biphenylphenoxy-Typ-(BPP-Typ-)Ligand-Metall-Präkatalysator der Formel (I) ist:

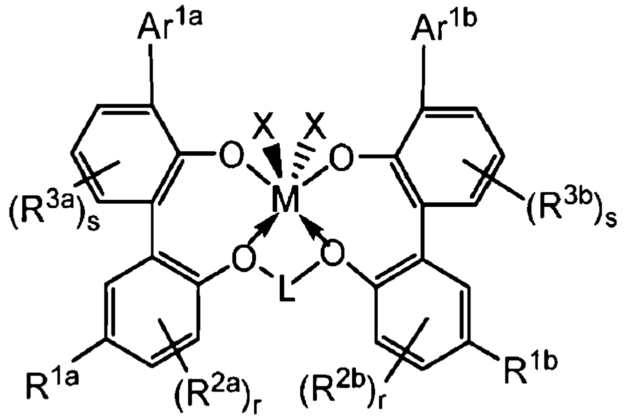

(I);

wobei L ein $CH_2CH_2$, $CH_2CH_2CH_2$, $CH_2CH_2CH_2CH_2$, $CH_2C(R^L)_2CH_2$, $CH_2CH(R^L)CH(R^L)CH_2$, $CH_2Ge(R^L)_2CH_2$, oder $CH_2Si(R^L)_2CH_2$ ist, wobei jedes $R^L$ unabhängig voneinander ein nicht substituiertes ($C_1$-$C_{20}$)-Alkyl ist; M Zr oder Hf ist; $R^{1a}$ und $R^{1b}$ jeweils unabhängig voneinander F, ($C_1$-$C_{20}$)-Alkyl, oder $Si(CH_3)_2(CH_2)_qCH_3$ ist, wobei Index q eine ganze Zahl von 0 bis 20 ist; jeder Index r unabhängig voneinander eine ganze Zahl von 0 bis 3 ist; $R^{2a}$ und $R^{2b}$ jeweils unabhängig voneinander H, F, Cl, ($C_1$-$C_5$)Alkyl ist, oder $R^{2a}$ und $R^{2b}$ aneinander gebunden sein können, um eine nicht substituierte oder substituierte Cycloalkylgruppe zu bilden; jeder Index s unabhängig voneinander eine ganze Zahl von 0 bis 3 ist; $R^{3a}$ und $R^{3b}$ jeweils unabhängig voneinander ein nicht substituiertes ($C_1$-$C_{20}$)-Alkyl oder ($C_1$-$C_{20}$)-Alkoxy ist; $Ar^{1a}$ und $A^{1b}$ jeweils unabhängig voneinander eine nicht substituierte oder substituierte aromatische Gruppe ist, ausgewählt aus Phenyl, substituiertem Phenyl, Biphenyl, substituiertem Biphenyl, Anthracen, substituiertem Anthracen, Carbazolyl und substituiertem Carbazolyl, wobei jeder Substituent der substituierten aromatischen Gruppe unabhängig voneinander Alkyl ist; und jedes X unabhängig voneinander eine einzähnige Gruppe oder jedes X Teil einer mehrzähnigen (z. B. zweizähnigen) Gruppe ist, die unabhängig voneinander ausgewählt ist aus einem Halogenatom, $((C_1$-$C_{20})$-Alkyl$)_{3-g}$-(Phenyl$)_g$Si-, wobei Index g 0, 1, 2 oder 3 ist; $CH_3$, ein ($C_2$-$C_{20}$)-Alkyl-$CH_2$, ein ($C_6$-$C_{12}$)-Aryl-(($C_0$-$C_{10}$)-Alkylen)-$CH_2$ (z. B. Benzyl, wenn ($C_6$-$C_{12}$)-Aryl Phenyl ist und ($C_0$-$C_{10}$)-Alkylen ($C_0$)-Alkylen ist), ein ($C_1$-$C_6$)-alkylsubstituiertes ($C_6$-$C_{12}$)-Aryl, ein ($C_1$-$C_6$)-alkoxysubstituiertes ($C_6$-$C_{12}$)-Aryl, ein ($C_1$-$C_6$)-alkoxysubstituiertes Benzyl und ein ($C_1$-$C_6$)-alkylsubstituiertes Benzyl; oder ein X ein 4-($C_1$-$C_{20}$)-alkylsubstituiertes 1,3-Butadienmolekül ist und jedes der verbleibenden X, falls vorhanden, unabhängig voneinander die einzähnige Gruppe X ist.

**2.** Verfahren nach Anspruch 1, wobei die modalitätserhöhende organische Verbindung die Formel ($A^1$) aufweist: $R^5$-C≡C-$R^6$ ($A^1$), die ausgewählt ist aus Phenylacetylen; einem (substituierten Phenyl)acetylen; Diphenylacetylen; einem substituierten Diphenylacetylen; einem Cycloalkylacetylen; einem Acetylen der Formel $HC{=}CSi(Phenyl)_h((C_1\text{-}C_{20})Alkyl)_{3\text{-}h}$, wobei Index h eine ganze Zahl von 0 bis 3 ist; und einem Acetylen der Formel $HC{\equiv}C\text{-}(CH_2)_mCH_3$, wobei Index m eine ganze Zahl von 1 bis 15 ist.

**3.** Verfahren nach Anspruch 1, wobei die modalitätserhöhende Verbindung die Formel ($B^1$) $(R^5)_2C{=}C{=}C(R^6)_2$ ($B^1$) aufweist und ausgewählt ist aus einem Cycloalkylallen; einem Alkylallen; einem Dialkylallen; einem Trialkylallen; einem Trialkylsilylallen; einem Vinylidencycloalkan; und einem Alkylester einer Allencarbonsäure.

**4.** Verfahren nach Anspruch 1, wobei die modalitätserhöhende organische Verbindung ausgewählt ist aus der Gruppe bestehend aus: Cyclohexylallen; Phenylacetylen; und 3,4-Difluorphenylacetylen.

**5.** Verfahren nach einem der Ansprüche 1 bis 4, wobei in dem Kombinationsschritt entweder (i) der erste unimodale Ligand-Metall-Präkatalysator und bimodale Ligand-Metall-Katalysator ungeträgert sind (d. h. frei von einem Trägermaterial); oder (ii) der erste unimodale Ligand-Metall-Präkatalysator ungeträgert ist und das Verfahren ferner nach dem Kombinationsschritt das Hinzufügen eines Trägermaterials zu dem bimodalen Ligand-Metall-Katalysator umfasst, um ein bimodales Katalysatorsystem zu ergeben, das das Trägermaterial und den bimodalen Ligand-Metall-Katalysator umfasst.

**6.** Verfahren nach einem der Ansprüche 1 bis 4, wobei in dem Kombinationsschritt der erste unimodale Ligand-Metall-Präkatalysator und der bimodale Ligand-Metall-Katalysator unabhängig voneinander geträgert auf einem Trägermaterial sind, so dass der Kombinationsschritt in Gegenwart des Trägermaterials durchgeführt wird und das Verfahren ein bimodales Katalysatorsystem herstellt, das das Trägermaterial und den bimodalen Ligand-Metall-Katalysator umfasst.

**7.** Verfahren nach einem der Ansprüche 1 bis 4, umfassend das Kombinieren in beliebiger Reihenfolge von Bestandteilen, die im Wesentlichen aus der modalitätserhöhenden organischen Verbindung, dem Aktivator und einem bimodalen Präkatalysatorsystem bestehen, das im Wesentlichen aus dem ersten unimodalen Ligand-Metall-Präkatalysator, einem zweiten unimodalen Ligand-Metall-Präkatalysator, der einen Liganden aufweist, der sich in der Zusammensetzung von dem Liganden/den Liganden des ersten unimodalen Ligand-Metall-Präkatalysators unterscheidet, und einem Trägermaterial besteht; wobei das Verfahren ein trimodales Katalysatorsystem herstellt, das im Wesentlichen aus dem bimodalen Ligand-Metall-Katalysator, einem zweiten unimodalen Ligand-Metall-Katalysator (z. B. einem Metallocen-Typ-Katalysator), der aus dem zweiten unimodalen Ligand-Metall-Präkatalysator und dem Aktivator hergestellt wird, und dem Trägermaterial besteht.

**8.** Verfahren nach einem der Ansprüche 1 und 5 bis 7, ferner umfassend, während oder nach dem Kombinationsschritt, Kontaktieren des bimodalen Ligand-Metall-Katalysators (Anspruch 1), des bimodalen Katalysatorsystems (Anspruch 5 oder 6) oder des trimodalen Katalysatorsystems (Anspruch 7) mit Ethylen und einem Alpha-Olefin in einem Polymerisationsreaktor unter stationären Polymerisationsbedingungen, um ein Poly(ethylen-co-alpha-olefin)-Copolymer mit einer bimodalen Molekulargewichtsverteilung ("bimodales Copolymer"; Anspruch 1, 5 oder 6) oder mit einer trimodalen Molekulargewichtsverteilung ("trimodales Copolymer"; Anspruch 7), wie durch Gelpermeationschromatographie (GPC) bestimmt, herzustellen.

**9.** Verfahren nach Anspruch 8, wobei ein vergleichendes unimodales Poly(ethylen-co-alpha-olefin)-Copolymer, hergestellt durch Kontaktieren eines ersten unimodalen Ligand-Metall-Katalysators, hergestellt aus dem ersten unimodalen Ligand-Metall-Präkatalysator und Aktivator in Abwesenheit der modalitätserhöhenden organischen Verbindung, mit Ethylen und dem Alpha-Olefin unter denselben stationären Polymerisationsbedingungen eine normale Kurzkettenverzweigungsverteilung pro 1000 Kohlenstoffatome (normale SCBD/1000C) aufweist und das bimodale Copolymer oder trimodale Copolymer eine verringerte normale SCBD/1000C aufweist; wobei das vergleichende unimodale Poly(ethylen-co-alpha-olefin)-Copolymer eine normale SCBD/1000C aufweist und das bimodale Copolymer oder trimodale Copolymer eine flache SCBD/1000C aufweist; wobei das vergleichende unimodale Poly(ethylen-co-alpha-olefin)-Copolymer eine normale SCBD/1000C aufweist und das bimodale Copolymer oder trimodale Copolymer eine umgekehrte SCBD/1000C aufweist; oder wobei das vergleichende unimodale Poly(ethylen-co-alpha-olefin)-Copolymer eine umgekehrte SCBD/1000C aufweist und das bimodale Copolymer oder trimodale Copolymer eine verstärkte umgekehrte SCBD/1000C aufweist.

**10.** Verfahren nach Anspruch 8 oder 9, wobei ein vergleichendes unimodales Poly(ethylen-co-alpha-olefin)-Copolymer,

hergestellt durch Kontaktieren eines ersten unimodalen Ligand-Metall-Katalysators, hergestellt aus dem ersten unimodalen Ligand-Metall-Präkatalysator und Aktivator in Abwesenheit der modalitätserhöhenden organischen Verbindung, mit Ethylen und dem Alpha-Olefin unter denselben stationären Polymerisationsbedingungen, eine Molekulargewichtsverteilung ($M_w/M_n$) von x aufweist, wobei $M_w$ das gewichtsmittlere Molekulargewicht und $M_n$ das zahlenmittlere Molekulargewicht ist, wie durch GPC gemessen, und das bimodale Copolymer oder trimodale Copolymer $M_w/M_n$ von 1,1x bis 5,0x aufweist.

**11.** Verfahren nach Anspruch 1, wobei der BPP-Typ-Ligand-Metall-Präkatalysator der Strukturformel (I) eine beliebige der Verbindungen (1) bis (2) ist:

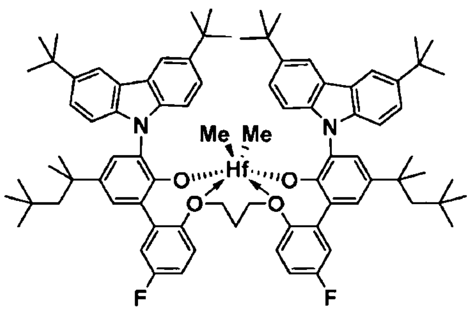 (1) und 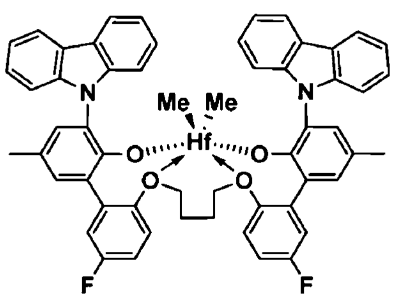 (2),

wobei jedes Me Methyl ist.

**12.** Verfahren nach einem der Ansprüche 1 bis 11, wobei das Metall des ersten unimodalen Ligand-Metall-Präkatalysators M ist, wobei der Aktivator eine Organoaluminiumverbindung ist und wobei die wirksame Menge des Aktivators ein Molverhältnis von Al/M von 0,5 bis 10.000, alternativ von 0,95 bis 200, alternativ von 1,0 bis 150, alternativ von 10 bis 100 ist; und/oder wobei die wirksame Menge der modalitätserhöhenden organischen Verbindung ein Molverhältnis von modalitätserhöhender organischer Verbindung zu erstem unimodalen Ligand-Metallocen-Präkatalysator (MIOC/FUC-Molverhältnis) von 0,5:1,0 bis 50,0:1,0, alternativ von 0,9:1,0 bis 20,0:1,0, alternativ von 0,9:1,0 bis 11:1,0, alternativ von 0,95:1,0 bis 6:1,0 umfasst.

**13.** Verfahren zur Herstellung eines Poly(ethylen-co-alpha-olefin)-Copolymers mit einer bimodalen Molekulargewichtsverteilung ("bimodales Copolymer"), wie durch Gelpermeationschromatographie (GPC) bestimmt, wobei das Verfahren im Wesentlichen aus dem Kontaktieren von Ethylen und einem Alpha-Olefin mit dem bimodalen Ligand-Metall-Katalysator, hergestellt durch das Verfahren nach einem der Ansprüche 1 bis 12, in einem Polymerisationsreaktor unter stationären Polymerisationsbedingungen besteht, um das bimodale Copolymer herzustellen.

## Revendications

**1.** Procédé de conversion chimique d'un précatalyseur ligand-métal unimodal en un catalyseur ligand-métal bimodal, le procédé comprenant la combinaison dans un ordre quelconque de constituants constitués essentiellement d'un premier précatalyseur ligand-métal unimodal, d'une quantité efficace d'un activateur, et d'une quantité efficace d'un composé organique augmentant la modalité dans des conditions efficaces pour que l'activateur et le composé organique augmentant la modalité convertissent chimiquement le premier précatalyseur ligand-métal unimodal en un catalyseur ligand-métal bimodal, permettant ainsi de préparer le catalyseur ligand-métal bimodal ; dans lequel le composé organique augmentant la modalité est de formule ($A^1$) ou ($B^1$) : $R^5$-C≡C-$R^6$ ($A^1$) ou $(R^5)_2C=C=C(R^6)_2$ ($B^1$) où chacun de $R^5$ et $R^6$ est indépendamment H ou $R^7$ ; et chaque $R^7$ est indépendamment un hydrocarbyle en $C_1$-$C_{20}$, -C(=O)-O-(hydrocarbyle en $C_1$-$C_{20}$ non substitué), un hétérohydrocarbyle en $C_1$-$C_{19}$, ou un tri(hydrocarbyl en $C_1$-$C_{20}$)silyle, ou deux $R^7$ sont pris ensemble pour former un alkylène en $C_3$-$C_8$ ; à condition que chaque $R^7$ soit dépourvu d'une double liaison carbone-carbone ; où chaque hydrocarbyle en $C_1$-$C_{20}$ est indépendamment non substitué ou substitué par 1 à 4 groupes substituants $R^S$ ; où chaque groupe substituant $R^S$ est choisi indépendamment parmi halogène, alkyle en $C_1$-$C_5$ non substitué, -C=CH, -OH, alcoxy en $C_1$-$C_5$, -C(=O)-(alkyle en $C_1$-$C_5$ non substitué), $-NH_2$, -N(H)(alkyle en $C_1$-$C_5$ non substitué), -N(alkyle en $C_1$-$C_5$ non substitué)$_2$, -COOH, -C(=O)-$NH_2$, -C(=O)-N(H)(alkyle en $C_1$-$C_5$ non substitué), -C(=O)-N(alkyle en $C_1$-$C_5$ non substitué)$_2$, -S-(alkyle en $C_1$-$C_5$ non substitué), -S(=O)$_2$-(alkyle en $C_1$-$C_5$ non substitué), -S(=O)$_2$-$NH_2$, -S(=O)$_2$-N(H)(alkyle en $C_1$-$C_5$ non substitué), -S(=O)$_2$-N(alkyle en $C_1$-$C_5$ non substitué)$_2$, -C(=)S-(alkyle en $C_1$-$C_5$ non substitué) et - COO(alkyle en $C_1$-$C_5$ non

substitué) ; et dans lequel le premier précatalyseur ligand-métal unimodal est un précatalyseur ligand-métal de type biphénylphénoxy (type BPP) de formule (I) :

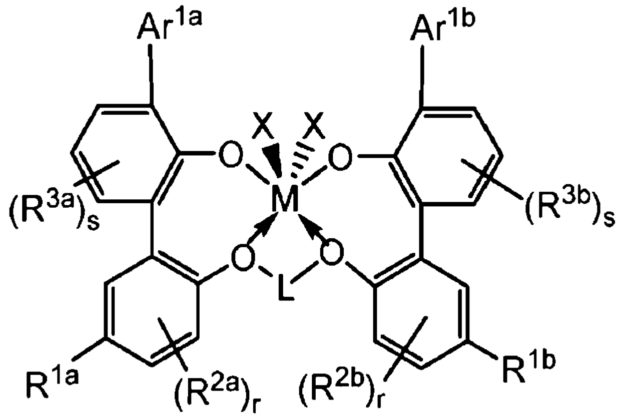

(I) ;

où L est un $CH_2CH_2$, $CH_2CH_2CH_2$, $CH_2CH_2CH_2CH_2$, $CH_2C(R^L)_2CH_2$, $CH_2CH(R^L)CH(R^L)CH_2$, $CH_2Ge(R^L)_2CH_2$, ou $CH_2Si(R^L)_2CH_2$, où chaque $R^L$ est indépendamment un alkyle en $C_1$-$C_{20}$ non substitué ; M est Zr ou Hf ; chacun de $R^{1a}$ et $R^{1b}$ est indépendamment F, alkyle en $C_1$-$C_{20}$, ou $Si(CH_3)_2(CH_2)_qCH_3$, où l'indice q est un nombre entier allant de 0 à 20 ; chaque indice r est indépendamment un entier allant de 0 à 3 ; chacun de $R^{2a}$ et $R^{2b}$ est indépendamment H, F, Cl, alkyle en $C_1$-$C_5$, ou $R^{2a}$ et $R^{2b}$ peuvent être liés l'un à l'autre pour former un groupe cycloalkyle non substitué ou substitué ; chaque indice s est indépendamment un entier allant de 0 à 3 ; chacun de $R^{3a}$ et $R^{3b}$ est indépendamment un alkyle en $C_1$-$C_{20}$ ou alcoxy en $C_1$-$C_{20}$ non substitué ; chaque $Ar^{1a}$ et $Ar^{1b}$ est indépendamment un groupe aromatique non substitué ou substitué choisi parmi phényle, phényle substitué, biphényle, biphényle substitué, anthracène, anthracène substitué, carbazolyle, et carbazolyle substitué, où chaque substituant du groupe aromatique substitué est indépendamment alkyle ; et chaque X est indépendamment un groupe monodentate ou chaque X fait partie d'un groupe multidentate (par exemple bidentate) choisi indépendamment parmi un atome d'halogène, (alkyl en $C_1$-$C_{20}$)$_{3-g}$-(phényl)$_g$Si-, où l'indice g vaut 0, 1, 2, ou 3 ; $CH_3$, un (alkyl en $C_2$-$C_{20}$)-$CH_2$, un (aryl en $C_6$-$C_{12}$)-(alkylène en $C_0$-$C_{10}$))-$CH_2$ (par exemple, benzyle lorsqu'aryle en $C_6$-$C_{12}$ est phényle et alkylène en $C_0$-$C_{10}$ est alkylène en $C_0$), un aryle en $C_6$-$C_{12}$ substitué par alkyle en $C_1$-$C_6$, un aryle en $C_6$-$C_{12}$ substitué par alcoxy en $C_1$-$C_{12}$, un benzyle substitué par alcoxy en $C_1$-$C_6$, et un benzyle substitué par alkyle en $C_1$-$C_6$ ; ou un X est une molécule de 1,3-butadiène substitué en 4 par alkyle en $C_1$-$C_{20}$ et chacun des X restants, le cas échéant, est indépendamment le groupe monodentate X.

2. Procédé selon la revendication 1, dans lequel le composé organique augmentant la modalité est de formule ($A^1$) : $R^5$-C≡C-$R^6$ ($A^1$) qui est choisi parmi phénylacétylène ; un acétylène à substitution phényle ; diphénylacétylène ; un diphénylacétylène substitué ; un cycloalkylacétylène ; un acétylène de formule HC≡CSi(phényl)$_h$(alkyle en $C_1$-$C_{20}$)$_{3-h}$, où l'indice h est un entier allant de 0 à 3 ; et un acétylène de formule HC≡C-$(CH_2)_mCH_3$, où l'indice m est un entier allant de 1 à 15.

3. Procédé selon l'une quelconque des revendications 1, dans lequel le composé augmentant la modalité est de formule ($B^1$) $(R^5)_2C=C=C(R^6)_2$ ($B^1$), et est choisi parmi un cycloalkylallène ; un alkylallène ; un dialkylallène ; un trialkylallène ; un trialkylsilylallène ; un vinylidènecycloalcane ; et un ester d'alkyle d'un acide allènecarboxylique.

4. Procédé selon la revendication 1, dans lequel le composé organique augmentant la modalité est choisi dans le groupe constitué de : cyclohexylallène ; phénylacétylène ; et 3,4-difluorophénylacétylène.

5. Procédé selon l'une quelconque des revendications 1 à 4, dans lequel, à l'étape de combinaison, soit (i) le premier précatalyseur ligand-métal unimodal et le catalyseur métal-ligand bimodal ne sont pas supportés (c'est-à-dire, exempts de matériau de support) ; soit (ii) le premier précatalyseur ligand-métal unimodal n'est pas supporté et le procédé comprend en outre, après l'étape de combinaison, l'ajout d'un matériau de support au catalyseur ligand-métal bimodal de manière à donner un système catalytique bimodal, qui comprend le matériau de support et le catalyseur ligand-métal bimodal.

6. Procédé selon l'une quelconque des revendications 1 à 4, dans lequel, à l'étape de combinaison, le premier précatalyseur ligand-métal unimodal et le catalyseur ligand-métal bimodal sont indépendamment supportés sur

un matériau de support, de telle sorte que l'étape de combinaison est effectuée en présence du matériau de support, et le procédé prépare un système catalytique bimodal comprenant le matériau de support et le catalyseur ligand-métal bimodal.

**7.** Procédé selon l'une quelconque des revendications 1 à 4, comprenant la combinaison dans un ordre quelconque de constituants constitués essentiellement du composé organique augmentant la modalité, de l'activateur, et d'un système de précatalyseur bimodal qui est essentiellement constitué du premier précatalyseur ligand-métal unimodal, d'un second précatalyseur ligand-métal unimodal qui a un ligand qui a une composition différente du ou des ligands du premier précatalyseur ligand-métal unimodal, et d'un matériau de support ; dans lequel le procédé prépare un système catalytique trimodal qui est essentiellement constitué du catalyseur ligand-métal bimodal, d'un second catalyseur ligand-métal unimodal (par exemple, un catalyseur de type métallocène) préparé à partir du second précatalyseur ligand-métal unimodal et de l'activateur, et du matériau de support.

**8.** Procédé selon l'une quelconque des revendications 1 et 5 à 7, comprenant en outre, pendant ou après l'étape de combinaison, la mise en contact du catalyseur ligand-métal bimodal (revendication 1), du système catalytique bimodal (revendication 5 ou 6), ou du système catalytique trimodal (revendication 7) avec de l'éthylène et une alpha-oléfine dans un réacteur de polymérisation dans des conditions de polymérisation à l'état d'équilibre de manière à préparer un copolymère de poly(éthylène-co-alpha-oléfine) ayant une distribution bimodale des masses moléculaires (« copolymère bimodal » ; revendication 1, 5 ou 6) ou ayant une distribution trimodale des masses moléculaires (« copolymère trimodal » ; revendication 7), telle que déterminée par chromatographie par perméation de gel (GPC).

**9.** Procédé selon la revendication 8, dans lequel un copolymère comparatif unimodal de poly(éthylène-co-alpha-oléfine) préparé par mise en contact d'un premier catalyseur ligand-métal unimodal, préparé à partir du premier précatalyseur ligand-métal unimodal et de l'activateur, en l'absence du composé organique augmentant la modalité, avec de l'éthylène et l'alpha-oléfine dans les mêmes conditions de polymérisation à l'état d'équilibre, a une distribution normale des ramifications à chaîne courte pour 1 000 atomes de carbone (SCBD/1000C normale) et le copolymère bimodal ou le copolymère trimodal a une SCBD/1000C normale diminuée ; dans lequel le copolymère comparatif unimodal de poly(éthylène-co-alpha-oléfine) a une SCBD/1000C normale et le copolymère bimodal ou le copolymère trimodal a une SCBD/1000C plate ; dans lequel le copolymère comparatif unimodal de poly(éthylène-*co*-alpha-oléfine) a une SCBD/1000C normale et le copolymère bimodal ou le copolymère trimodal a une SCBD/1000C inversée ; ou dans lequel le copolymère comparatif unimodal de poly(éthylène-co-alpha-oléfine) a une SCBD/1000C inversée et le copolymère bimodal ou le copolymère trimodal a une SCBD/1000C inversée augmentée.

**10.** Procédé selon la revendication 8 ou 9, dans lequel un copolymère comparatif unimodal de poly(éthylène-*co*-alpha-oléfine) préparé par mise en contact d'un premier catalyseur ligand-métal unimodal, préparé à partir du premier précatalyseur ligand-métal unimodal et de l'activateur en l'absence du composé organique augmentant la modalité, avec de l'éthylène et de l'alpha-oléfine dans les mêmes conditions de polymérisation à l'état d'équilibre, a une distribution des masses moléculaires ($M_w/M_n$) de x, dans lequel $M_w$ est une masse moléculaire moyenne en poids et $M_n$ est une masse moléculaire moyenne en nombre, telles que mesurées par GPC, et le copolymère bimodal ou le copolymère trimodal a une $M_w/M_n$ allant de 1,1 x à 5,0x.

**11.** Procédé selon la revendication 1, dans lequel le précatalyseur ligand-métal de type BPP de formule structurelle (I) est l'un quelconque des composés (1) à (2) :

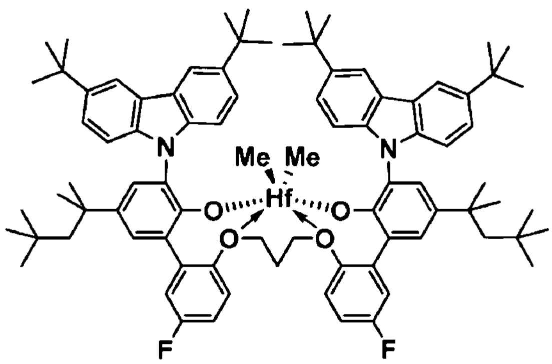

(1) et

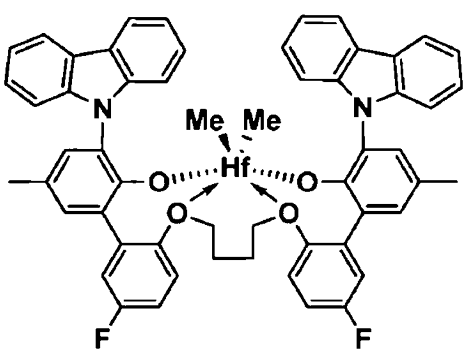

(2), où chaque Me est méthyle.

**12.** Procédé selon l'une quelconque des revendications 1 à 11, dans lequel le métal du premier précatalyseur ligand-métal unimodal est M, dans lequel l'activateur est un composé organoaluminium, et dans lequel la quantité efficace de l'activateur est un rapport molaire Al/M allant de 0,5 à 10 000, alternativement de 0,95 à 200, alternativement de 1,0 à 150, alternativement de 10 à 100 ; et/ou dans lequel la quantité efficace du composé organique augmentant la modalité comprend un rapport molaire entre composé organique augmentant la modalité et premier précatalyseur ligand-métal unimodal (rapport molaire MIOC/FUC) allant de 0,5:1,0 à 50,0:1,0, alternativement de 0,9:1,0 à 20,0:1,0, alternativement de 0,9:1,0 à 11:1,0, alternativement de 0,95:1,0 à 6:1,0.

**13.** Procédé de préparation d'un copolymère de poly(éthylène-*co*-alpha-oléfine) ayant une distribution bimodale des masses moléculaires (« copolymère bimodal »), telle que déterminée par chromatographie par perméation de gel (GPC), le procédé consistant essentiellement à mettre en contact de l'éthylène et une alpha-oléfine avec le catalyseur ligand-métal bimodal préparé par le procédé selon l'une quelconque des revendications 1 à 12 dans un réacteur de polymérisation dans des conditions de polymérisation à l'état d'équilibre de manière à préparer le copolymère bimodal.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6995219 B
- US 2020131283 A
- CA 3117995 A
- WO 2012027448 A1
- WO 2014105411 A1
- WO 2017058981 A1
- WO 2018022975 A1
- WO 2018170227 A1
- US 4665208 A
- US 4952540 A
- US 5091352 A
- US 5206199 A
- US 5204419 A
- US 4874734 A
- US 4924018 A
- US 4908463 A
- US 4968827 A
- US 5308815 A
- US 5329032 A
- US 5248801 A
- US 5235081 A
- US 5157137 A
- US 5103031 A
- US 5391793 A
- US 5391529 A
- US 5693838 A
- EP 0561476 A
- EP 0279586 B1
- EP 0594218 A
- WO 9410180 A
- US 5919983 A
- WO 2014149360 A1
- WO 9960033 A
- US 5965477 A
- EP 0511665 A
- US 6034187 A
- EP 0767184 A
- WO 9947598 A
- WO 9948605 A
- US 5972510 A
- WO 9950311 A
- US 5648310 A
- EP 0802203 A
- US 5688880 A
- US 8291115 B2
- US 3709853 A
- US 4003712 A
- US 4011382 A
- US 4302566 A
- US 4543399 A
- US 4882400 A
- US 5352749 A
- US 5541270 A
- US 20180079836 A1
- EP 0802202 A
- BE 839380
- US 5627242 A
- US 5665818 A
- US 5677375 A
- EP 0794200 A
- EP 0649992 B1
- EP 634421 B
- US 4453399 A
- US 4588790 A
- US 4994534 A
- US 5462999 A
- US 6489408 B
- US 4988783 A
- US 20060173123 A
- WO 2019246069 A


### Non-patent literature cited in the description


- IUPAC is International Union of Pure and Applied Chemistry. IUPAC Secretariat
- IUPAC Compendium of Chemical Technology. Gold Book. 24 February 2014
- Periodic Table of the Elements. IUPAC, 01 December 2018
- *Analytical Chemistry*, 2014, vol. 86 (17), 8649-8656
- **DEAN LEE** ; **COLIN LI PI SHAN** ; **DAVID M. MEUNIER** ; **JOHN W. LYONS** ; **RONGJUAN CONG** ; **A. WILLEM DEGROOT**. Toward Absolute Chemical Composition Distribution Measurement of Polyolefins by High-Temperature Liquid Chromatography Hyphenated with Infrared Absorbance and Light Scattering Detectors. *Analytical Chemistry*, 2014, vol. 86 (17), 8649-8656